# EUROPÄISCHE PATENTSCHRIFT

(11) **EP 3 401 171 B1**
(45) Veröffentlichungstag und Bekanntmachung des Hinweises auf die Patenterteilung: **27.11.2019**
(21) Anmeldenummer: 18171222.5
(22) Anmeldetag: 08.05.2018
(51) Int. Cl.: B60T 7/20, B60D 1/32

(54) **AUFLAUFBREMSVORRICHTUNG FÜR EINEN ANHÄNGER**
OVERRUN BREAK FOR A TRAILER
DISPOSITIF DE FREIN À INERTIE POUR UNE REMORQUE

(30) Priorität: 12.05.2017 DE 202017002650 U; 17.05.2017 DE 202017002708 U; 09.06.2017 DE 202017003066 U
(43) Veröffentlichungstag der Anmeldung: 14.11.2018
(73) Patentinhaber: Humbaur GmbH, 86368 Gersthofen (DE)
(72) Erfinder: Blatt, Hans-Peter, 76831 Birkweiler (DE)
(74) Vertreter: Kilchert, Jochen

(56) Entgegenhaltungen:
- EP-A1- 1 055 573
- CH-A- 218 548
- DE-A1- 2 003 500
- GB-A- 1 096 090
- GB-A- 1 567 038

## Beschreibung

Es sind Auflaufbremsen an Caravan oder Anhängern jeglicher Art bekannt. Ein wesentlicher Nachteil dieser Anlagen besteht durch die Integrierung von altertümlichen Trommelbremsen mit schlechtem Steuerungsverhalten beim Fahrtwechsel von Vorausfahrt zur Rückwärtsfahrt.

Aus EP 1 055 573 A1 ist eine Auflaufbremsvorrichtung für gezogene Fahrzeuge mit einem fest mit dem Fahrzeug verbundenen Deichselrohr bekannt. In dem Deichselrohr ist ein Zugrohr verschiebbar geführt, in dem ein Schwingungsdämpfer mit einem Zylinder und einem darin geführten Dämpfungskolben, der einen Überströmquerschnitt aufweist, angeordnet ist. Um Beschädigungen des Schwingungsdämpfers bei sehr großen Auszugkräften zu verhindern, ist der Schwingungsdämpfer mit einem zusätzlichen Überströmquerschnitt versehen, der durch ein druckbetätigt öffnendes Ventil verschlossen ist.

Die Aufgabe der Erfindung ist es, eine zwangsgesteuerte Luftdruck unterstützte Auflaufbremsvorrichtung zu schaffen, insbesondere mit einer Zugstange, welche einen hydraulischen Zylinder bildet, sowie einem integrierten Zylinderkolben, der als Deichselstangenteil durch deren hubförmigen Bewegungen hydraulischen Druck erzeugt, die zusätzlich durch mech. Federn verstärkt werden.

Diese Aufgabe wird gelöst durch eine Auflaufbremsvorrichtung mit den Merkmalen des Patentanspruchs 1.

Die Erfindungsidee soll in die allgemein bekannte Technik, welche aus Deichselrohrgehäuse mit durchgeführter Zugstange besteht, integriert werden um ein besseres Bremsverhalten zur Verfügung zu stellen.

Die Erfindung beschreibt eine Anhänger-Auflaufbremse, im Wesentlichen bestehend aus erfindungsgemäß konstruiert und formmäßig ausgelegter Zug- und Deichselstange, nachfolgend Elemente genannt.

Das Deichselrohr ist längs hubmäßig in der Zugstange gleitend geführt und gelagert, wobei das Deichselrohr in fester Verbindung zum Anhänger steht.

Durch den Erfindungsgedanken sollen kleinere Relativ-Bewegungen der beiden Hauptelemente zwischen Beschleunigungs- und Bremsvorgang durch eine integrierte Federkraft-Nivellierung zusammen mit den konstruktiven Luftkammern kompensiert werden.

Es soll eine stoßabsorbierende Wirkung erzielt werden, die keinen Einfluss auf die Bremsbetätigung erzielt, was bedeutet, dass die Bremse in einem neutralen geöffneten Zustand bleiben soll.

Größere Relativ-Bewegungen zwischen den Elementen Zug- und Deichselrohr, welche über den Nivellierungskennwerten der Stoß- bzw. Druckfedern liegen, bedingen durch die gegenseitige Element-Verschiebung, welche durch die Masseträgheit beim Beschleunigen oder Bremsen stattfindet, einen nachfolgend beschriebenen Druckauf- bzw. Abbau, der ein Öffnen oder Schließen je nach Fahrzustand der Bremse mit sich führt.

Im Fahrbetrieb des Gespannes hat der Anhänger das Bestreben bei einem Bremsvorgang des Zugfahrzeuges auf dieses durch seine Masseträgheit bedingt aufzulaufen, was bedeutet, dass sich das Deichselrohr längs geführt in das Zugrohr schiebt.

Entgegengesetzt hat bei einem Beschleunigungsvorgang das Deichselrohr das Bestreben aus dem Zugrohr zu fahren.

Diesen gegebenen Bewegungsablauf macht sich der Erfindungsgedanken zu Nutze, in dem er die beiden Elemente dergestalt formt, dass sich durch die hubähnliche gegenseitige Bewegung drei federunterstützte Druckluftzylinder bilden.

Das Zugrohr dient durch ein integriertes Mittelrohr als Träger eines Zylinderkörpers. Dieser Zylinderkörper besitzt die Funktion eines hydraulischen Zylinders, welcher über einen fluiden Ausgang verfügt.

Um das mittlere Zylindertragrohr ist eine Feder mit den entsprechenden Kennwerten platziert.

Das Deichselrohr, welches in fester Verbindung zum Anhänger steht, wird durch das Zugrohr längs geführt und besitzt einen das mittlere Zylindertragrohr umgebenden Endanschlag, welcher dazu dient die beschriebene Feder je nach Fahrzustand zu be- oder entlasten.

Zusätzlich dient dieser Anschlag am mittleren Zylindertragrohr einer Arretierung gegenüber dem Zugrohr beim Beschleunigen.

Während dem Beschleunigungsvorgang kann das Deichselelement durch den Anschlag nicht aus dem Zugrohr fahren.

Dem Erfindungsgedanken folgend ist außerhalb des Zugrohres am Deichselrohrboden eine Kolbenstange arretiert, welche fluid abgedichtet in den hydraulischen Zylinder des Zugrohres geführt wird.

Innerhalb des hydraulischen Zugrohrzylinders ist der Arbeitskolben mit der aufgeführten Kolbenstange verbunden.

Mit den jeweiligen Element-Hubbewegungen baut der mit dem Deichselelement verbundene hydraulische Kolben gegenüber dem Zugrohrelement einen hydraulischen Arbeitsdruck auf oder ab.

Dieser hydraulische Druck wird über eine fluide Ableitung an die jeweils integrierte Bremsanlage geleitet, um ein Öffnen oder Schließen der Bremse zu bewirken.

In einer weiteren vorteilhaften Ausführung, ist der im beschriebenen hydraulischen Zylinder befindliche Arbeitskolben mit einem oder mehrerer Bohrkanäle ausgestattet.

Auf der Kolbenarbeitsfläche befindet sich eine Membrane die durch den aufgebauten hydraulischen Arbeitsdruck diese Fluidkanäle abdichtet.

Sobald sich auf der Kolbenrückseite sogenannte verlorene Flüssigkeit befindet, wird diese durch den aufgebauten fluiden Druck beim zurückfahren des Kolbens durch die Flusskanäle gedrückt, so dass diese verlorene Flüssigkeit in Folge der Druckentlastung über die Membrane in den Arbeitsbereich wieder zurückgeleitet wird.

Dadurch ist ein entlüften des Zylinders nicht mehr erforderlich.

Damit ein abscheren der fluiden Zylinderleitung während der gegenseitigen hubähnlichen Element-Bewegungen verhindert wird, ist das Deichselrohr mit einem dem Hub entsprechenden Langloch ausgeführt, welches der Führung der fluiden Leitung durch das Zugrohrelement dient.

In dieser Ausgestaltung ist die Kolbenstange ebenfalls mit einer Zug- oder Druckfeder ummantelt, damit die Möglichkeit gegeben ist, die verschiedenen unterschiedlichen Fahrzustände abzufedern bzw. zu dämpfen.

Beide Federn sollen gleichzeitig in neutraler Stellung die beiden Elemente dergestalt ausnivellieren, dass die Bremsanlage in einem geöffneten Zustand bleibt.

Eine neutrale geöffnete Bremssituation ist wichtig, um ein Rückwärtsfahren des Gespannes ohne negative Bremsbetätigung zu ermöglichen.

Von einem neutralen Zustand der geöffneten Bremse ausgehend besitzt die erfindungsgemäße Anlage sowohl einen Zugrohr-Luftzylinder als auch einen Deichselrohr-Luftzylinder, welche jeweils die aufgeführten Federn enthalten.

Bewegt sich bedingt durch einen Bremsvorgang das Deichselelement bis zum gedachten Anschlag innerhalb des Zugrohrelementes, so bildet sich ein mittlerer dritter Luftzylinder, zwischen dem Deichselrohranschlag, welcher dazu dient, ein Ausfahren des Deichselrohres aus dem Zugrohr zu verhindern und dem hydraulischen Zylinderboden im Zugrohr.

In einer weiteren Ausgestaltung kann auch dieser dritte Luftzylinder mit einer entsprechenden Zug- oder Druckfeder ausgelegt werden.

Der Erfindungsgedanke integriert in diese drei aufgeführten Luftzylinder entsprechende Luftkanäle, welche sich mechanisch bedingt durch die gegenseitigen hubähnlichen Elementverschiebungen Öffnen bzw. Schließen.

Man kann in Folge des technischen Funktionsablaufes zwischen den Elementen von einer Zwangssteuerung der Luftzufuhr ausgehen.

Befindet sich die Anlage in einem neutralen Zustand, so wird die Luft über einen Zugrohrkanal in den Zugrohrzylinder geleitet.

Gleichzeitig ist das Deichselelement mit einem Luftkanal ausgelegt, so dass sich auch dieser Zylinderraum, welcher die Kolbenstange beinhaltet, mit Luft füllt.

Bewegungsbedingt schiebt sich bei einem Bremsvorgang das Deichselelement in das Zugelement, was mit einem gleichzeitigen verschließen der beiden Luftzylinder verbunden ist.

In der Folge wird diese Luft komprimiert und dient in einer stoßdämpferähnlichen Funktion einem sensiblen, präzisen und gedämpften Bremsvorgang.

Der aufgezeigte mittlere Luftzylinder bildet sich beim Zusammengehen der Elemente.

Dieser Luftzylinder umhüllt quasi das mit der Zugstange verbundene Rohrelement, welches den hydraulischen Zylinder integriert.

Sobald das Gespann beschleunigt, hat das Deichselelement das Bestreben aus dem Zugelement zu fahren, was eine Komprimierung des Luftzylinderinhaltes zwischen dem Deichselelementanschlag gegenüber dem Zylinderboden bewirkt.

Dadurch wird einem Anschlag des Deichselelementes gegenüber dem Zugrohr-Zylinderelementes vorgebeugt, gleichzeitig bewirkt dies einen dämpfenden Übergang zwischen den gegenseitigen Elementbewegungen.

In einer weiteren vorteilhaften Ausgestaltung schlägt die Erfindungsidee vor, die jeweiligen Luftausgänge der beiden Elemente innerhalb der gegenseitigen hubähnlichen Bewegungen beispielhaft über Magnetventile zu Öffnen oder zu Schlie-ßen.

Diese Anwendung ermöglicht das System in die elektrische Bordversorgung zu integrieren, so dass bei einem Rückwärtsfahren des Gespannes über den gegebenen elektr. Kreislauf eine automatische Bedienung möglich ist.

Die Folge eines gesperrten Luftaustrittes des Zylinders ermöglicht auch mit dem Gespann eine beträchtliche Steigung rückwärts zu fahren, ohne das die Bremse mit einem Schließvorgang reagiert.

Vorteilhaft ist die Anbringung von Schmiernippeln an den beiden Elementen angedacht, um eine Wartung bzw. Instandhaltung der Anlage sicher zu stellen.

Um das jeweilige Anhängefahrzeug im Stillstand über eine Handbremse abzusichern, ist konstruktionsbedingt ein Handbremshebel angedacht, welcher beispielhaft mit einem zusätzlich integrierten hydraulischen Zylinder verbunden ist, welcher an beispielhafter Position integriert sein kann.

Damit die Sicherheitsvorschriften im Falle einer unvorhergesehenen Verkehrssituation erfüllt werden, ist die Bremsanlage über den Handbremshebel bzw. dessen Umlenkhebels mit einem Abreißseil verbunden.

Dieses Abreißseil wird über eine Schlinge an der Anhängevorrichtung bzw. Abschleppöse des Zugfahrzeuges befestigt.

Sobald sich durch einen Unfall oder anderes der Anhänger vom Zugfahrzeug unkontrolliert löst, wird durch den Zug des Abreißseiles eine Schließung der Bremsanlage über den Handbremshebel sowie dem verbundenen Hydraulikzylinder bewirkt.

Ein jeweiliges Ausführungsbeispiel der Erfindung wird auf den nachfolgenden beigefügten Zeichnungen beschrieben.

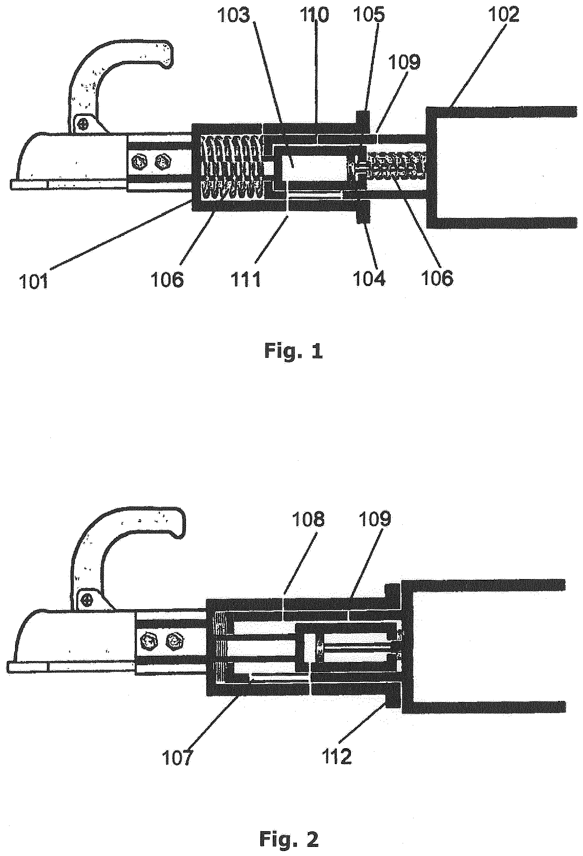

Fig. 1: Die Darstellung zeigt die Auflaufbremsvorrichtung in geöffnetem Bremszustand. Es ist der Zugstangenkopf (101) aufgezeigt, welcher in der Verlängerung in einer inneren rohrähnlichen Führung einen Zylinder (103) besitzt, welcher einen Ausgang (111) zur Ableitung der hydraulischen Flüssigkeit gewährleistet. Das äußere Zugstangenrohr besitzt gleichfalls eine Durchgangsbohrung (111) durch welche die fluide Leitung zu der jeweils integrierten Bremsanlage geleitet wird. Das Zugrohr (101) ist zusätzlich mit einem Luftkanal (108) aufgezeigt, welcher dem Zuführen von Luft für den Zugrohrzylinder dienlich ist. Das integrierte Deichselrohr (102) besitzt sowohl einen Anschlag gegenüber dem Zugrohr (112), als auch einen Anschlag gegenüber dem im Zugrohr integrierten hydraulischen Zylinder. Damit wird bei einer Beschleunigung das Ausfahren des Deichselrohres (102) aus dem Zugrohr (101) verhindert. Vorteilhaft ist das Deichselrohr (102) mit einem Langloch (107) ausgestattet, welcher ein Abscheren der fluiden Leitung bei den gegenseitigen hubähnlichen Bewegungen zwischen dem Deichsel- und Zugrohr (102, 101) unterbindet. Es sind im pneumatischen Zugrohrzylinder und im pneumatischen Deichselrohrzylinder jeweils Federn (106) zur dämpfenden Unterstützung der beiden Elemente gegeneinander aufgezeigt.

Fig. 2: Die Darstellung zeigt die Auflaufbremsvorrichtung in geschlossenem Bremszustand. Hier ist das Deichselrohr (102) zusammen mit der integrierten Kolbenstange (105) sowie deren Kolben (104) in das Zugrohr gefahren. Der Arbeitskolben (104) zeigt eine sogenannte Kolben-OT, welche einen hydraulischen Druckaufbau darstellt, so dass die jeweilig integrierte Bremse sich in geschlossenem Zustand befindet. Es sind der Luftkanal (108) zwischen Zug- und Deichselrohr übereinander abgestimmt, so dass sich der gebildete innere Zylinder zwischen der hydraulischen Zylinderoberseite und der Innenseite des Deichselrohres (102) mit Luft füllen kann, so dass eine pneumatische Dämpfung stattfinden kann. Der geschlossene Systemzustand zeigt die beiden Federn (106) in dämpfenden also zusammengedrückten Zustand auf. Sobald ein Beschleunigungsvorgang stattfindet bewegt sich die Zugstange (101) aus dem Deichselrohr (102), so dass der innere Deichselrohrzylinder gegenüber dem Zylinder (103) aufgrund seiner Luftfüllung gleichfalls eine dämpfende Wirkung besitzt.
1. Luftdruck-hydr. gesteuerte Auflaufbremsvorrichtung, die über Zug- bzw. Deichselrohr drei beispielhaft Feder-unterstütze zwangsgesteuerte Luftzylinder bildet und zusätzlich einen hydraulischen Zugrohrzylinder mit Kolben integriert.
2. Luftdruck-hydr. gesteuerte Auflaufbremsvorrichtung, nach Ausführungsform 1 dadurch gekennzeichnet, dass die Bremsvorrichtung auf zwei hubförmig in einander greifenden Elementen wie Zug- (101) sowie Deichselrohr (102) aufgebaut ist.
3. Luftdruck-hydr. gesteuerte Auflaufbremsvorrichtung, nach Ausführungsform 1 bis 2 dadurch gekennzeichnet, dass die gegenseitige Ausbildung des Zug- und Deichselrohres (101, 102) einen hydraulischen Zugrohr verbundenen Zylinderkörper (103) bildet.
4. Luftdruck-hydr. gesteuerte Auflaufbremsvorrichtung, nach Ausführungsform 1 bis 3 dadurch gekennzeichnet, dass die gegenseitige Austauschbarkeit der beiden Grundelemente untereinander keine wesentliche Wirkung auf die Funktion der Bremsvorrichtung besitzt und im Erfindungsgedanken integriert ist.
5. Luftdruck-hydr. gesteuerte Auflaufbremsvorrichtung, nach Ausführungsform 1 bis 4 dadurch gekennzeichnet, dass das Deichselrohr (102) und die Kolbenstange (105) mit Kolben (104) eine Einheit bildet und der Kolben (104) über die Kolbenstange (105) in den hydraulischen Zugrohrzylinder (103) geführt ist.
6. Luftdruck-hydr. gesteuerte Auflaufbremsvorrichtung, nach Ausführungsform 1 bis 5 dadurch gekennzeichnet, dass das Zusammenwirken von Zug- und Deichselrohr (101, 102) je nach Fahrzustand drei synchron arbeitende Luftzylinder bildet, in welchen das Deichselrohr (102) mindestens eine doppelte Kolbenfunktion innerhalb des Zugrohr tätigt.
7. Luftdruck-hydr. gesteuerte Auflaufbremsvorrichtung, nach Ausführungsform 1 bis 6 dadurch gekennzeichnet, dass das Zug- und das Deichselrohr (101, 102) über Luftkanäle (109, 110) verfügt, welche die gebildeten Arbeitszylinder während ihrer Hubbewegung mit Luft versorgt, so dass diese eine Art pneumatischer Arbeit verrichten.
8. Luftdruck-hydr. gesteuerte Auflaufbremsvorrichtung, nach Ausführungsform 1 bis 7 dadurch gekennzeichnet, dass sich bei einem geschlossenen Systemzustand das Deichselrohr (102) mit seiner vorderen Druckplatte in das Zugrohr (101) schiebt, so dass sich zwischen Innenseite des Deichselrohres (102) gegenüber der hydraulischen Zylinderoberseite ein zusätzlicher Luftkanal (109) versorgter Zylinder-Prallraum bildet, welcher beispielhaft ebenfalls mit einer Feder integriert werden kann, um ein Anschlagen der beiden Elemente während des Beschleunigungsvorganges gegeneinander zu verhindern.
9. Luftdruck-hydr. gesteuerte Auflaufbremsvorrichtung, nach Ausführungsform 1 bis 8 dadurch gekennzeichnet, dass das Deichselrohr (102) über ein dem Hub entsprechendes Langloch (107) zur Führung der hydraulischen Leitung verfügt, um ein Abscheren oder Abklemmen zu verhindern.
10. Luftdruck-hydr. gesteuerte Auflaufbremsvorrichtung, nach Ausführungsform 1 bis 9 dadurch gekennzeichnet, dass das Zugrohr (101) eine äußere Bohrung (111) zum Durchführen der hydraulischen Leitung besitzt, welche mit dem Ausgang des hydraulischen Zylinders (103) im innen Bereich des Zugrohres übereinstimmt.
11. Luftdruck-hydr. gesteuerte Auflaufbremsvorrichtung, nach Ausführungsform 1 bis 10 dadurch gekennzeichnet, dass der Luftkanal (109) des Deichselrohrzylinders bei geöffnetem Bremszustand offen ist, während bei einem Bremsvorgang durch das Einfahren des Deichselrohres (102) in das Zugrohr (101) dieses abgedichtet und geschlossen ist.
12. Luftdruck-hydr. gesteuerte Auflaufbremsvorrichtung, nach Ausführungsform 1 bis 11 dadurch gekennzeichnet, dass der Luftkanal des Zugrohres (101) synchron mit dem Luftkanal (109) der Deichselstange (102) durch das gegenseitige Einfahren verschlossen wird.
13. Luftdruck-hydr. gesteuerte Auflaufbremsvorrichtung, nach Ausführungsform 1 bis 12 dadurch gekennzeichnet, dass die Lufteinlasskanäle (109, 110) bzw. die beispielhaften Luftauslasskanäle der Luftzylinder zwangsgesteuert über gegenseitige variable Anordnungen sowie mittels beispielhaft integrierter Magnetventile geöffnet oder geschlossen werden, um ein Rückwärtsfahren des Gespannes ohne Bremsbetätigung zu ermöglichen.
14. Luftdruck-hydr. gesteuerte Auflaufbremsvorrichtung, nach Ausführungsform 1 bis 13 dadurch gekennzeichnet, dass beide Luftzylinder mit Druck bzw. Zugfedern (106) ausgestattet sind, welche die entsprechenden Federkennwerte besitzen, um das Deichselrohr (102) mit den integrierten Zylindern selbstständig durch Federdruck in einen Zustand gegenüber dem Zugrohr (101) zu versetzen, welcher einer geöffneten Bremse entspricht.
15. Luftdruck-hydr. gesteuerte Auflaufbremsvorrichtung, nach Ausführungsform 1 bis 14 dadurch gekennzeichnet, dass die Zugstange (101) am Rohrausgang mit einem beispielhaften Pralltopf (112) gegenüber der Auflauffläche des Deichselrohres (102) ausgestattet ist.
16. Luftdruck-hydr. gesteuerte Auflaufbremsvorrichtung, nach Ausführungsform 1 bis 15 dadurch gekennzeichnet, dass die Bremsvorrichtung über Schmiernippel an vorteilhaften Positionen verfügt, um eine einwandfreie Wartung oder Gangbarkeit sicher zu stellen.
17. Luftdruck-hydr. gesteuerte Auflaufbremsvorrichtung, nach Ausführungsform 1 bis 16 dadurch gekennzeichnet, dass das System unter beispielhafter Integrierung eines zusätzlichen Zylinders die Einbringung einer beispielhaften Hand- bzw. Notbremse ermöglicht.
18. Luftdruck-hydr. gesteuerte Auflaufbremsvorrichtung, nach Ausführungsform 1 bis 17 dadurch gekennzeichnet, dass das Erfindungssystem eine hydraulische Funktionalität mit oder ohne Luftkammern mit deren Zwangssteuerung inkl. deren Druck- oder Zugfedern im Erfindungsgedanken enthält.
19. Luftdruck-hydr. gesteuerte Auflaufbremsvorrichtung, nach Ausführungsform 1 bis 18 dadurch gekennzeichnet, dass das Bremssystem jede beliebige andere Kombination der integrierten Elemente alle insgesamt offenbarten Merkmale beinhaltet, sollte ein aufgeführtes Element der Ausführungsform 1 wegfallen oder durch ein an anderer Stelle integriertes Einzelmerkmal ersetzt werden, so ist dies im weiteren Erfindungsgedanken beinhaltet.

Es sind Auflaufbremsen an Caravan oder Anhängern jeglicher Art bekannt, welche über Jahrzehnte keinerlei wesentliche Weiterentwicklungen integrieren.

Bis heute muss sich der Kunde mit dem gebotenen technischen Standard zufrieden geben, welcher sich unter der real möglichen Leistung bewegt.

Die Erfindungsidee soll eine federunterstützte Auflaufbremsvorrichtung mit drei zwangsgesteuerten pneumatischen Zylindern schaffen, welche mittels gegenseitigen Hubbewegungen über einen integrierten Bowdenzug eine technisch bekannte Bremse bedienen kann.

Vorzugsweise soll das Ansprechverhalten des erfindungsgemäßen Bremssystems zusammen mit der Bremsleistung gesteigert werden.

Die Erfindung beschreibt eine federunterstützte Auflaufbremsvorrichtung mit drei zwangsgesteuerten pneumatischen Zylindern, welche mittels gegenseitigen Hubbewegungen über einen integrierten Bowdenzug eine technisch bekannte Bremse bedient.

Alternativ zu einer rein mechanischen Ausbildung soll die Vorrichtung über die Bowdenzug-Integrierung die Hubbewegungen der beiden Elemente mittels eines einfachwirkenden hydraulischen Geberzylinders über zwei flexible fluide Abgänge übertragen.

Diese leiten die hydraulische Leistung auf den jeweiligen Nehmerzylinder innerhalb der technisch bekannten Trommelbremsen.

Damit wird die Möglichkeit geschaffen, mechanische Kraft in hydraulische Kraft zu wandeln.

In einer weiteren Ausführung besteht die Möglichkeit, die Bowdenzug-Hubbewegung mittels Integrierung eines Kniehebels wesentlich zu verstärken.

Dieser Kniehebel kann an jeder vorteilhaften Position innerhalb des Systems integriert werden.

Die Grundelemente der Bremsvorrichtung sind ein Zugrohr sowie ein Deichselrohr.

Das Deichselrohr ist längs hubmäßig in der Zugstange gleitend geführt und gelagert, wobei das Deichselrohr in fester Verbindung zum Anhänger steht.

Durch den Erfindungsgedanken sollen kleinere Relativ-Bewegungen der beiden Hauptelemente zwischen Beschleunigungs- und Bremsvorgang durch eine integrierte Federkraft-Nivellierung zusammen mit den konstruktiven Luftkammern kompensiert werden.

Es soll eine stoßabsorbierende Wirkung erzielt werden, die keinen Einfluss auf die Bremsbetätigung erzielt, was bedeutet, dass die Bremse in einem neutralen geöffneten Zustand bleiben soll.

Größere Relativ-Bewegungen zwischen den Elementen Zug- und Deichselrohr, welche über den Nivellierungskennwerten der Stoß- bzw. Druckfedern liegen, bedingen durch die gegenseitige Element-Verschiebung, welche durch die Masseträgheit beim Beschleunigen oder Bremsen stattfindet, einen Einfluss auf die Bremswirkung.

Im Fahrbetrieb des Gespannes hat der Anhänger das Bestreben bei einem Bremsvorgang des Zugfahrzeuges auf dieses durch seine Masseträgheit bedingt aufzulaufen, was bedeutet, dass sich das Deichselrohr längs geführt in das Zugrohr schiebt.

Dagegen hat bei einem Beschleunigungsvorgang das Deichselrohr das Bestreben aus dem Zugrohr zu fahren.

Diesen gegebenen Bewegungsablauf macht sich der Erfindungsgedanken zu Nutze, in dem er die beiden Elementen vorteilhaft dergestalt formt, so dass sich durch ihre hubähnliche eigene formgegebene gegenseitige Bewegung drei federunterstützte Druckluftzylinder bilden.

Innerhalb des Zugrohres befindet sich mittig ein mit zwei gegenüberliegenden Langlöchern ausgestattetes Führungsrohr, welches sowohl als Justieranschlag für das Deichselrohr, als auch der Arretierung des durchgeführten Bowdenzugs dient.

Der Erfindungsgedanke schließt eine hybride hydraulische Ausführung ein.

Bei dieser Ausführung ist beispielhaft an der Bowdenzug-Bremskraftverteilung ein hydraulischer einfach wirkender Geber-Zylinder integriert. Dieser Zylinder wird durch seine Bowdenzug-Integrierung bedient, was bedeutet, dass mechanische Kraft in hydraulische Kraft gewandelt wird.

Der Geberzylinder kann an jeder vorteilhaften Position innerhalb der Systemausführung integriert sein.

Diese hydraulische Kraft wird über technisch bekannte flexible fluide Leitungen an die angedachten Nehmer-Zylinder in den integrierten technisch bekannten Trommelbremsen geleitet.

Um das Bremsmoment des Deichselrohres gegenüber dem Zugrohr wirkungsvoller abzufedern, ist das Führungsrohr mit einer Druck-Zugfeder ummantelt.

Durch diese Federpositionierung stützt sich die Feder gegenüber der Zugstange und dem einlaufenden Deichselrohr als Prallfeder ab.

Die in dem Zugmittelrohr integrierten Langlöcher dienen dazu, ein innerhalb des Rohres hubmäßig der Deichselstange entsprechend beweglich integriertes Bowdenzug-Anschlags-Befestigungsteil zu führen und arretieren.

Dieses Führungsteil ist innerhalb des Zugmittel-Rohres dergestalt positioniert, dass die Deichselstange beim Einfedern dieses Führungsteils im Zugrohr-Zylinder vor sich her schieben kann.

Sobald sich das Deichselrohr in das Zugrohr bedingt durch einen Bremsvorgang schiebt, wird über ein durch die Langlöcher geführtes diagonales Bolzenteil die Hubkraft des Deichselrohres als Arbeitskraft auf die diagonale Bolzenbefestigung des Bowdenzug-Führungsteiles übertragen.

Durch die beschriebene Hubbewegung entsteht eine Vor- oder Rückwärtsbewegung des Bowdenzuges im Zugrohr, was ein Öffnen oder Schließen der integrierten Bremse bedeutet.

Es wird der Verlauf des Bremsbowdenzugs nochmals wie folgt aufgeführt. Der Bowdenzug wird über das Deichselrohr in den pneumatischen Deichselrohrzylinder abgedichtet geführt, so dass die Ummantelung des Bowdenzuges sich im Deichselrohr gegenüber dem mittleren inneren Zugrohr abstützen kann.

Der Bowdenzug wird abgedichtet durch die Ausgangsöffnung des Deichselzylinderrohrs in das mit Langlöchern ausgeführte Innenrohr weitergeführt.

Hier ist er über das beschriebene und aufgeführte hubähnlich bewegte Arretierteil mit seiner Bolzenarretierung befestigt.

Zusätzlich ist das Führungsrohr-Ende geschlossen ausgestattet, damit es wie beschrieben einen zusätzlichen Federanschlag zwischen Zug und Deichselrohr schafft.

In dieser vorteilhaften Ausgestaltung entstehen durch die vorteilhaften Rohrformungen pneumatische Zylinderräume, welche erfindungsbedingt sowohl Anschläge als auch kolbenähnliche Abdichtungen innerhalb der gegenseitig bewegten Rohrelemente bilden.

Das Deichselrohr, welches eine feste Verbindung zum Anhänger hat, wird durch das Zugrohr längs geführt und besitzt einen das Mittelrohr umgebenden Endanschlag.

Vorteilhaft kann während einem Beschleunigungsvorgang durch die Konstruktionsauslegung das Deichselelement bedingt durch den beschriebenen Anschlag nicht aus dem Zugrohr fahren.

In einer weiteren vorteilhaften Ausgestaltung kann die Auflaufbremsvorrichtung je nach Erfindungsauslegung auf die aufgeführten Langlochführungen inkl. des Führungsteiles verzichten.

Hier ist die Bowdenzug-Führung dergestalt geführt, dass das Deichselrohr in seiner kolbenartigen Hubbewegung den integrierten Bowdenzug direkt in den Zugrohrzylinder bewegt, was ebenfalls ein Schließen der Bremsanlage bedeutet.

Erfindungsgemäß befindet sich je eine Zug-Druckrohrfeder im Zugrohr- und im Deichselrohrzylinder. Damit wird durch die integrierten Federn mit ihren entsprechenden Kennwerten innerhalb der beschriebenen Zylinder den beiden Elementen gegenüber automatisch eine neutrale Stellung sichergestellt.

Dieser mechanische Zustand entspricht technisch einer automatischen Nivellierung.

Die neutral nivellierte geöffnete Bremssituation ist wichtig, um ein Rückwärtsfahren des Gespannes ohne negative Bremsbetätigung zu ermöglichen.

Den neutralen Bremszustand vorausgesetzt, besitzt die erfindungsgemäße Anlage wie beschrieben sowohl einen Zugrohr-Luftzylinder als auch einen Deichselrohr-Luftzylinder.

Bewegt sich bedingt durch einen Bremsvorgang das Deichselelement bis zum aufgeführten Anschlag innerhalb des Zugrohrelementes, so bildet sich ein weiterer mittlerer dritter pneumatischer Luftzylinder, zwischen dem Deichsel und Zugrohranschlag.

Dieser dient in doppelter Eigenschaft dazu, wie beschrieben, ein Ausfahren des Deichselrohres aus dem Zugrohr zu verhindern.

Vorteilhaft stellt der Erfindungsgedanke den sich bildenden pneumatischen Zylinderraum, für eine Abfederung der gegenseitigen Massekräfte, zur Verfügung.

Das bedeutet, dass die beiden Elemente stoßdämpferähnlich gegeneinander sowohl bei einem Beschleunigung- als auch bei einem Bremsvorgang abgedämpft sind.

In einer weiteren Ausgestaltung kann auch dieser dritte Luftzylinder mit einer entsprechenden Pralltopffederung beispielhaft ausgelegt sein.

Der Erfindungsgedanke integriert in diese drei aufgeführten Luftzylinder entsprechende Luftkanäle, welche sich mechanisch bedingt durch die gegenseitigen hubähnlichen Elementverschiebungen öffnen bzw. schließen.

Man kann in Folge des mechanisch gesteuerten Funktionsablaufes, welcher sich zwischen Brems- und Beschleunigungszustand ergibt, von einer Zwangssteuerung der Luftzufuhr zu den aufgeführten pneumatischen Zylindern ausgehen.

Befindet sich die Anlage in dem beschriebenen neutral nivellierten offenen Zustand, so wird die Luft über einen Zugrohrkanal in den inneren pneumatischen Zylinderraum vor dem Deichselrohrabschluss geleitet.

Gleichzeitig ist das Deichselzylinderelement ebenfalls mit einem offenen Luftkanal ausgelegt, so dass sich auch dieser Zylinderraum selbststädnig mit Luft füllen kann.

Bewegungsbedingt schiebt sich bei einem Bremsvorgang das Deichselelement in das Zugelement, was mit einem gleichzeitigen mechanischen Verschließen der beiden Luftzylinder verbunden ist.

In der Folge durch die Elementbewegung gegeneinander wird diese Luft komprimiert und dient, in einer stoßdämpferähnlichen Funktion, einem sensiblen, präzisen und gedämpften Bremsvorgang.

Im Erfindungsgedanken sind beispielhafte Luftablässe an allen technisch vorteilhaften Positionen angedacht, welche dazu dienen die gepresste Luft langsam der Fahrsituation entsprechend abzuführen.

Der aufgezeigte mittlere dritte Luftzylinder bildet sich beim Zusammengehen, also einem Bremszustand der Elemente zwischen dem Deichselrohr-Innenteil und dem Mittelrohr-Innenteil.

Durch diesen sich bildeten Zylinderraum ist auch der Bowdenzug durchgeführt.

Konstruktionsbedingt umhüllt dieser Luftzylinder quasi das mit der Zugstange verbundene Mittelrohr.

Sobald das Gespann beschleunigt hat das Deichselelement das beschriebene Bestreben aus dem Zugelement zu fahren, was eine Komprimierung des Luftzylinderinhaltes zwischen dem Deichselelement und dem Bowdenzug-Arretierungsring bewirkt.

Dadurch wird einem harten Aufprall des Deichselelementes gegenüber dem Zugrohr-Zylinderelementes vorgebeugt.

In einer weiteren vorteilhaften Ausgestaltung schlägt die Erfindungsidee vor, die jeweiligen Luftausgänge der beiden Elemente, innerhalb der gegenseitigen hubähnlichen Bewegungen, beispielhaft über Magnetventile zu öffnen oder zu schlie-ßen.

Diese Anwendung ermöglicht das System in die elektrische Bordversorgung zu integrieren, so dass bei einem Rückwärtsfahren des Gespannes, über den gegebenen elektrischen Kreislauf, eine automatische Bedienung möglich ist.

Die Folge eines gesperrten Luftaustrittes des Zylinders ermöglicht auch mit dem Gespann eine beträchtliche Steigung rückwärts zu fahren, ohne dass die Bremse mit einem Schließvorgang reagiert.

Um das jeweilige Anhängefahrzeug im Stillstand über eine Handbremse abzusichern, ist konstruktionsbedingt ein Handbremshebel angedacht, welcher beispielhaft an vorteilhafter Position integriert sein kann.

Diese Handbremse ist eine technisch bekannte Bowdenzugbremse.

Auch bei dieser Anwendung ist die direkte Verbindung des Bowdenzuges mit dem beispielhaften Handbremshebel integriert.

Das bedeutet, dass der durch das Deichsel- und Zugrohr geführte Bowdenzug durch eine abgedichtete Öffnung aus dem Zugrohrzylinders geführt ist.

An dieser Zugrohr-Ausgangsposition ist die Anbindung des Bowdenzuges an den beispielhaften Handbremshebel angedacht.

Bei jeder normalen Bremssituation schiebt das Deichselrohr wie beschrieben den Bowdenzug mit seiner Weiterführung an den Handbremshebel in bzw. durch den Zugrohrzylinder ohne den Handbremshebel zu bedienen.

Betätigt man den Handbremshebel, so wird der Bowdenzug aufgrund seiner einseitigen Arretierung zwischen den Hebel und dem Deichselrohr gegenüber durch den Zugrohr-Zylinder gezogen, was ein Schließen der Bremse bedeutet.

Die mechanische Zugkraft des Handbremshebels am Bowdenzug gegenüber der Bremskraft im hydraulischen Geber- und Nehmerzylinder kann wie eingangs der Beschreibung aufgeführt durch die Integration eines Kniehebels wesentlich verstärkt werden.

Damit die Sicherheitsvorschriften im Falle einer unvorhergesehenen Verkehrssituation erfüllt werden, ist die Bremsanlage über den Handbremshebel bzw. dessen Umlenkhebels, wie technisch bekannt, mit einem Abreißseil verbunden.

Dieses Abreißseil wird über eine Schlinge an der Anhängevorrichtung bzw. Abschleppöse des Zugfahrzeuges befestigt.

Bei einem Unfall oder einer ähnlichen gefährlichen Situation, bei der sich der Anhänger unkontrolliert vom Zugfahrzeug löst, wird durch den Zug des Abreißseiles eine Schließung der Bremsanlage über den Handbremshebel bewirkt.

Ein jeweiliges Ausführungsbeispiel der Erfindung wird auf den nachfolgenden beigefügten Zeichnungen beschrieben.

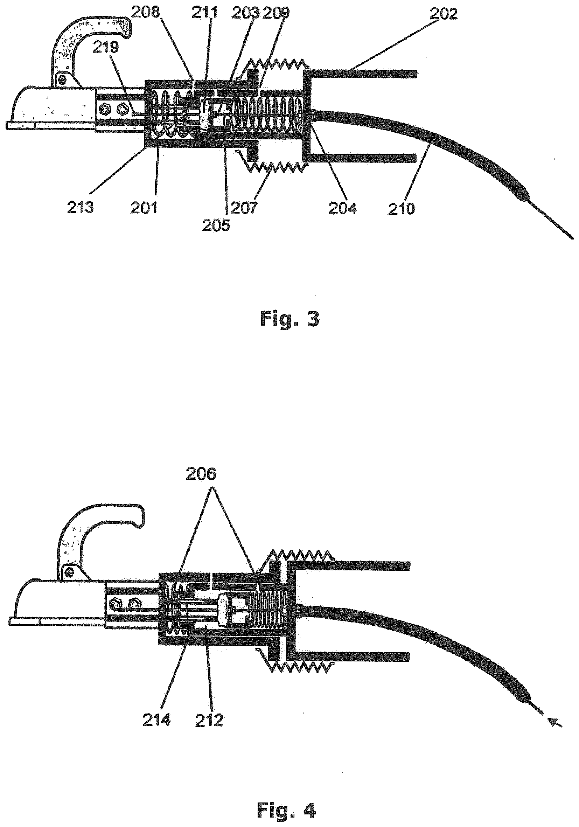

Fig. 3: Die Darstellung zeigt die Auflaufbremsvorrichtung in geöffnetem Bremszustand. Es ist der Zugstangenkopf (201) aufgezeigt, welcher in der Verlängerung ein Mittelrohr besitzt. Dieses ist mit zwei Langlöchern (214) sowie dem Bowdenzug-Befestigungsteil (213) aufgezeichnet. Der Bowdenzug (210) wird über ein zylinderförmiges Mittelrohrteil hubmäßig geführt und über das Deichselrohr (202), welches einer Anschlagsjustierung der Ummantelung (204) dient, zu der jeweiligen angedachten Bremse geleitet. Eine Staubschutzverbindung als Faltenbalg (207) stellt eine elastische Verbindung zwischen den beiden Elementen dar. Das Zugrohr (201) ist zusätzlich mit einem Luftkanal (208) aufgezeigt, welcher dem Zuführen von Luft für den Zugrohrzylinder (208) dienlich ist. Das integrierte Deichselrohr (202) besitzt sowohl einen Anschlag gegenüber dem Zugrohr (201), als auch einen Anschlag gegenüber der im Zugrohr integrierten Bowdenzug-Aufnahme. Damit wird bei einer Beschleunigung das Ausfahren des Deichselrohres (202) aus dem Zugrohr (201) verhindert. Es sind im pneumatischen Zugrohrzylinder (208) und im pneumatischen Deichselrohrzylinder (209) jeweils Federn (206) zur dämpfenden Unterstützung der beiden Elemente gegeneinander aufgezeigt.

Fig. 4: Die Darstellung zeigt die Auflaufbremsvorrichtung in geschlossenem Bremszustand. Hier ist das Deichselrohr (202) in das Zugrohr (201) gefahren. In diesem aufgezeichneten Bremszustand hat das Deichselrohr (202) mit Hilfe des Bowdenzug-Justierungsteils (204) den Bowdenzug (210) aus dem Deichselrohr (202) durch die Zugrohrführung (201) gezogen, was ein Schließen der jeweils angedachten Bremsanlage beinhaltet. Es sind der Luftkanal (208) zwischen Zug- und Deichselrohr übereinander abgestimmt, so dass sich der gebildete innere Zylinder (212) zwischen dem ZugrohrAnschlag, sowie der Innenseite des Deichselrohres (202) mit Luft füllen kann, so dass eine pneumatische Dämpfung stattfinden kann. Der geschlossene Systemzustand zeigt die beiden Federn (206) in dämpfenden, also zusammengedrückten Zustand auf. Sobald ein Beschleunigungsvorgang stattfindet bewegt sich die Zugstange (201) gedämpft aus dem Deichselrohr (202), da der innere pneumatische Zylinder (212) aufgrund seiner Luftfüllung eine stoßdämpferähnliche Wirkung besitzt.

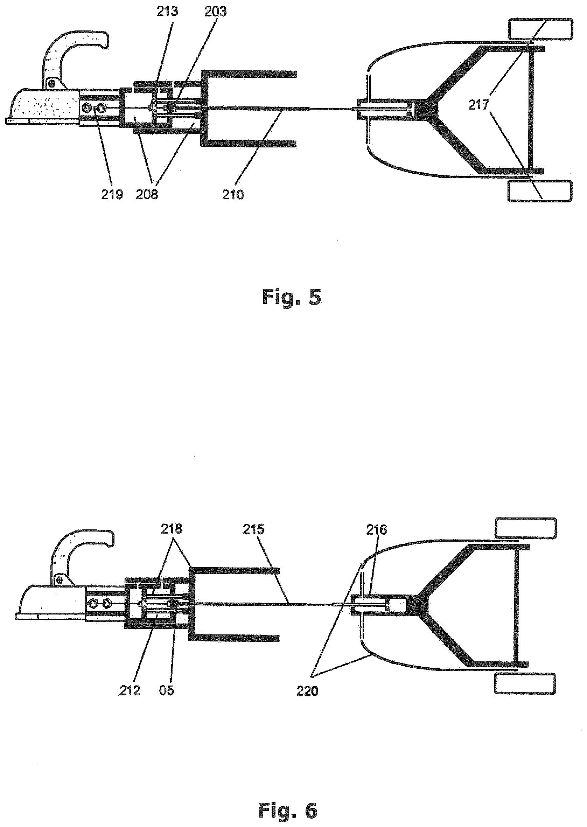

Fig. 5: Die Darstellung zeigt die Auflaufbremsvorrichtung in gegensätzlicher Elementausführung. Bei dieser Darstellung ist das Zugrohr (201) innen im Deichselrohr (202) positioniert. Das Deichselrohr (202) verfügt über dargestellte doppelte Kolbenbolzen (218), welche durch den Zylinderboden des Zugrohres (201) geführt, einen Kolben (218) integriert haben. Der Bowdenzug (210) verläuft durch das Deichselrohr (202) beweglich in das Zugrohr (201) und ist am Deichselrohrkolben (218) justiert und arretiert. Zur Anbindung an den angedachten Handbremshebel, wird die verlängerte BowdenzugLeitung (210) aus dem Zugrohrzylinder (201) geführt. Dazu zeigt die Zeichnung die Bremse in geöffneten neutralen Zustand, so dass der Bowdenzug (210) eine Verbindung mit dem angedachten hydraulischen Zylinder (216) darstellen kann. Das Deichselrohr (202) ist formal mit zwei an einer Achse angelenkten Räder (217) inklusive der fluiden Zuleitungen (220) aufgezeichnet.

Fig. 6: Die Darstellung zeigt wie unter Fig. 5 geschildert die Bremseinrichtung jedoch im gebremsten Modus. Hier ist der Deichselrohrkolben (218) unter Mitnahme des Bowdenzugs (210) in den Zugrohrzylinder gefahren. Dazu ist eine Kniehebel-Integrierung (215) beispielhaft eingezeichnet. Der integrierte hydraulische Zylinder (216) ist im Gegensatz zu Fig. 5 im Druckzustand was eine Schließung der Bremse bedeutet.

Im Rahmen der vorliegenden Anmeldung werden ferner folgende Ausführungsformen offenbart:
1. Hybride federunterstütze Bowdenzug-Auflaufbremsvorrichtung, die über gegenseitige Hubbewegungen drei oder jede andere Anzahl zwangsluftgesteuerte pneumatische Zylinder mit Kolben bildet, um eine Radbremse mechanisch oder hydraulisch zu bedienen.
2. Hybride federunterstütze Bowdenzug-Auflaufbremsvorrichtung nach Ausführungsform 1 dadurch gekennzeichnet, dass die Bremsvorrichtung auf zwei hubförmig in einander greifenden Elementen wie Zug- (201) sowie Deichselrohr (202) aufgebaut ist.
3. Hybride federunterstütze Bowdenzug-Auflaufbremsvorrichtung, nach Ausführungsform 1 und 2 dadurch gekennzeichnet, dass die gegenseitige Ausbildung des Zug- und Deichselrohres (201, 202) pneumatische Arbeitszylinder (208) in stoßdämpferähnlicher Funktion bildet.
4. Hybride federunterstütze Bowdenzug-Auflaufbremsvorrichtung, nach Ausführungsform 1 bis 3 dadurch gekennzeichnet, dass die gegenseitige Austauschbarkeit der beiden Grundelemente Zug- bzw. Deichselrohr (201, 202) untereinander keine wesentliche Wirkung auf die Funktion der Bremsvorrichtung besitzt und im Erfindungsgedanken integriert ist.
5. Hybride federunterstütze Bowdenzug-Auflaufbremsvorrichtung, nach Ausführungsform 1 bis 4 dadurch gekennzeichnet, dass das Deichselrohr (202) mit einer oder mehrerer Kolbenstange(n) (218) ausgeführt ist, welche durch abgedichtete Führungen in das Zugrohr (201) geführt sind, um einen Arbeitskolben mit Bowdenzug-Arretierung (213) zur Bremsbetätigung zu integrieren.
6. Hybride federunterstütze Bowdenzug-Auflaufbremsvorrichtung, nach Ausführungsform 1 bis 5 dadurch gekennzeichnet, dass das Zusammenwirken von Zug- und Deichselrohr (201, 202) je nach Fahrzustand drei synchron arbeitende Luftzylinder (208, 212) bildet, in welchen das Deichselrohr (202) mindestens eine doppelte Kolbenfunktion innerhalb des Zugrohr (201) tätigt.
7. Hybride federunterstütze Bowdenzug-Auflaufbremsvorrichtung, nach Ausführungsform 1 bis 6 dadurch gekennzeichnet, dass das Zug- und das Deichselrohr (201, 202) über Luftkanäle (209, 210) verfügt, welche die gebildeten Arbeitszylinder (208, 212) während ihrer Hubbewegung selbstständig mit Luft versorgt, so dass diese eine Art pneumatischer Arbeit verrichten.
8. Hybride federunterstütze Bowdenzug-Auflaufbremsvorrichtung, nach Ausführungsform 1 bis 7 dadurch gekennzeichnet, dass sich bei einem geschlossenen Systemzustand das Deichselrohr (202) mit seiner vorderen Druckplatte in das Zugrohr (201) schiebt, so dass sich zwischen Innenseite des Deichselrohres (202) gegenüber der Bowdenzug-Durchführungsplatte am inneren Zugrohr (201) ein zusätzlicher Luftkanal (209) versorgter ZylinderPrallraum (212) bildet, welcher beispielhaft ebenfalls mit einer Feder (206) integriert werden kann,
9. Hybride federunterstütze Bowdenzug-Auflaufbremsvorrichtung, nach Ausführungsform 1 bis 8 dadurch gekennzeichnet, dass das mittlere Zugrohr (202) über zwei dem Hub entsprechende Langlöcher (214) zur Führung des Bowdenzug-Arretierteils innerhalb des Mittelrohrs verfügt.
10. Hybride federunterstütze Bowdenzug-Auflaufbremsvorrichtung, nach Ausführungsform 1 bis 9 dadurch gekennzeichnet, dass das Zugrohr (201) durch jede technisch mögliche Zylinderausführung inkl. derer Kolben- und Kolbenstange eine Bowdenzug-Führung (213) über das Deichselrohr (202) ohne Langlochführung ermöglicht.
11. Hybride federunterstütze Bowdenzug-Auflaufbremsvorrichtung, nach Ausführungsform 1 bis 10 dadurch gekennzeichnet, dass der Luftkanal (209) des Deichselrohrzylinders bei geöffnetem Bremszustand offen ist, während bei einem Bremsvorgang durch das Einfahren des Deichselrohres (202) in das Zugrohr (201) dieser abgedichtet und geschlossen ist.
12. Hybride federunterstütze Bowdenzug-Auflaufbremsvorrichtung, nach Ausführungsform 1 bis 11 dadurch gekennzeichnet, dass der Luftkanal (208) des Zugrohres (201) synchron mit dem Luftkanal (209) der Deichselstange (202) durch das gegenseitige Einfahren verschlossen wird.
13. Hybride federunterstütze Bowdenzug-Auflaufbremsvorrichtung, nach Ausführungsform 1 bis 12 dadurch gekennzeichnet, dass die Lufteinlasskanäle (208, 209) bzw. die beispielhaften Luftauslasskanäle der Luftzylinder zwangsgesteuert über gegenseitige variable Anordnungen sowie mittels beispielhaft integrierter Magnetventile geöffnet oder geschlossen werden, um ein Rückwärtsfahren des Gespannes ohne Bremsbetätigung zu ermöglichen.
14. Hybride federunterstütze Bowdenzug-Auflaufbremsvorrichtung, nach Ausführungsform 1 bis 13 dadurch gekennzeichnet, dass beide Luftzylinder (208) mit Druck- bzw. Zugfedern (206) ausgestattet sind, welche die entsprechenden Federkennwerte besitzen, um das Deichselrohr (202) mit den integrierten Zylindern selbstständig durch Federdruck in einen Zustand gegenüber dem Zugrohr (201) zu versetzen, welcher einer geöffneten Bremse entspricht.
15. Hybride federunterstütze Bowdenzug-Auflaufbremsvorrichtung, nach Ausführungsform 1 bis 14 dadurch gekennzeichnet, dass die Zugstange (201) am Rohrausgang mit einem beispielhaften Pralltopf (211) gegenüber der Auflauffläche des Deichselrohres (202) ausgestattet ist.
16. Hybride federunterstütze Bowdenzug-Auflaufbremsvorrichtung, nach Ausführungsform 1 bis 15 dadurch gekennzeichnet, dass die Bremsvorrichtung über den integrierten Bowdenzug (210) mittels eines an beliebiger Stelle positionierten Kniehebels (215) oder Anderer und einem hydraulischen Zylinder über dessen fluide Leitungen, mechanische Bremskraft durch Hebelkraft in hydraulische Bremskraft wandeln kann, um die Radbremszylinder hydraulisch zu bedienen.
17. Hybride federunterstütze Bowdenzug-Auflaufbremsvorrichtung, nach Ausführungsform 1 bis 16 dadurch gekennzeichnet, dass das System unter beispielhafter Integrierung eines Handhebels am Zugrohr (201) mittels einer Verbindung mit dem durch die Zugstange geführten Bowdenzug-Endteil (219) eine Handbrems- und Notbremseinrichtung zur Verfügung stellt.
18. Hybride federunterstütze Bowdenzug-Auflaufbremsvorrichtung, nach Ausführungsform 1 bis 17 dadurch gekennzeichnet, dass das Erfindungssystem eine mechanische Funktionalität mit oder ohne Luftkammern sowie aller technisch integrierbarer Medien mit deren Zwangssteuerung inkl. beispielhafter Druck- oder Zugfedern in beliebiger Anzahl im Erfindungsgedanken enthält.
19. Hybride federunterstütze Bowdenzug-Auflaufbremsvorrichtung, nach Ausführungsform 1 bis 18 dadurch gekennzeichnet, dass das Bremssystem jede beliebige andere Kombination der integrierten Elemente alle insgesamt offenbarten Merkmale beinhaltet, sollte ein aufgeführtes Element der Ausführungsform 1 wegfallen oder durch ein an anderer Stelle integriertes Einzelmerkmal ersetzt werden, so ist dies im weiteren Erfindungsgedanken beinhaltet.

Es sind Auflaufbremsen an Caravan oder Anhängern jeglicher Art bekannt, welche über Jahrzehnte keinerlei wesentliche Weiterentwicklungen integrieren.

Die Erfindungsidee soll eine pneumatische federunterstützte Auflaufbremseinrichtung schaffen, die über Hubbewegungen zwangsgesteuerte Zylinder mit Kolben bildet, um eine Radbremse zu bedienen.

Vorzugsweise soll das Ansprechverhalten des erfindungsgemäßen Bremssystems im Einklang mit der Bremsleistung gesteigert werden.

Die Erfindung beschreibt eine pneumatische federunterstützte Auflaufbremseinrichtung, die über Hubbewegungen zwangsgesteuerte Zylinder mit Kolben bildet, um eine Radbremse zu bedienen.

Damit wird die Möglichkeit geschaffen, mechanische Kraft in pneumatische Kraft zu wandeln, um ein Bremssystem zu bedienen.

In einer vorteilhaften Ausführung kann mittels der Hublänge sowie des integrierten Kolbendurchmessers das Zylindervolumen geändert werden.

Dadurch ist die Voraussetzung gegeben, durch Hubraum-Veränderungen einen der Bremsleistung entsprechenden pneumatischen Druck durch die gegenseitigen Hubbewegungen aufzubauen.

Die Grundelemente der Bremsvorrichtung sind ein Zugrohr sowie ein Deichselrohr.

Konstruktionsbedingt ist das Zugrohr mit dem Zugfahrzeug verbunden, während das Deichselrohr in einer festen Verbindung mit dem Anhänger steht.

Das Deichselrohr wird längs hubmäßig in der Zugstange gleitend geführt und gelagert.

Durch den Erfindungsgedanken sollen kleinere Relativ-Bewegungen der beiden Hauptelemente zwischen Beschleunigungs- und Bremsvorgang durch eine integrierte Federkraft-Nivellierung zusammen mit den konstruktiven Luftkammern kompensiert werden.

Es soll eine stoßabsorbierende Wirkung erzielt werden, die keinen Einfluss auf die Bremsbetätigung erzielt, was bedeutet, dass die Bremse in einem neutralen geöffneten Zustand bleiben soll.

Größere Relativ-Bewegungen zwischen den Elementen Zug- und Deichselrohr, welche über den Nivellierungskennwerten der Stoß- bzw. Druckfedern liegen, bedingen durch die gegenseitige Element-Verschiebung, welche durch die Masseträgheit beim Beschleunigen oder Bremsen stattfindet, einen Einfluss auf die Bremswirkung.

Im Fahrbetrieb des Gespannes hat der Anhänger das Bestreben bei einem Bremsvorgang des Zugfahrzeuges auf dieses durch seine Masseträgheit bedingt aufzulaufen, was bedeutet, dass sich das Deichselrohr längs geführt in das Zugrohr schiebt.

Dadurch wird sowohl die Kolbenplatte, als auch die Zylinderbodenseite des Deichselrohres als Druckkolben verwendet, welche die integrierte Luft in den beiden Zylindern komprimiert.

Durch das Zusammenfahren der beiden Elemente, werden die beiden Zuluftführungen mechanisch verschlossen, so dass die komprimierte

Luft über die angedachten Luftkanalführungen in die beispielhafte Bremszuleitung zum Öffnen oder Schließen einer Bremsanlage geführt wird.

Dagegen hat bei einem Beschleunigungsvorgang das Deichselrohr das Bestreben aus dem Zugrohr zu fahren.

Diesen gegebenen Bewegungsablauf macht sich der Erfindungsgedanken zu Nutze, in dem er die beiden Elemente vorteilhaft dergestalt formt, so dass sich durch ihre hubähnliche eigene formgegebene gegenseitige Bewegung drei pneumatische Druckluftzylinder bilden.

Um das Bremsmoment des Deichselrohres gegenüber dem Zugrohr wirkungsvoller abzufedern, kann das Führungsrohr beispielhaft eine Integrierte Druck-Zugfeder beinhalten.

Durch diese Federpositionierung stützt sich die Feder gegenüber der Zugstange und dem einlaufenden Deichselrohr als Prallfeder ab.

Es wird die Funktion der pneumatischen Auflaufbremse nochmals wie folgt aufgeführt:
Das Zugrohr bildet durch seine Formgebung einen geschlossenen Zylinder. Dieser besitzt an dem der Deichselstange zugewandten Zylinderboden zwei Führungslöcher. Zusätzlich besitzt der Zugstangenzylinder noch zwei Entlüftungslöcher, welche der nachfolgend beschrieben Zwangsbelüftung dienen.

Durch die hubmäßig geführte Aufnahme des Zugrohres im Deichselrohr, bildet sich zwischen den beiden Elementen ein weiterer Zylinderraum.

Dieser Zylinderraum im Deichselrohr beinhaltet eine Bohrung zur Zwangsbelüftung und zusätzlich ein Langloch, welches der nachfolgend beschriebenen Entlüftung des sich bildenden zweiten Zugstangenzylinders dient.

Die Deichselstange ist in ihrer Auslegung mit zwei hohlen fest verbundenen Kolbenstangen ausgestattet, welche durch die beschriebenen Führungsbohrungen in den Zugrohrzylinder geführt werden.

Beide Kolbenführungsstangen sind am unteren Bereich mit zwei Lufteinlässen versehen, um den Druckaufbau innerhalb des Bremsvorganges, zwischen den beiden Elementen, in die aufgeführten Luftkanäle innerhalb der Kolbenführungsstangen einzuleiten.

Im Zugrohrzylinderraum ist auf den Kolbenführungsstangen eine Kolbenplatte befestigt, welche zwei Bohrungen aufweist, um einen
pneumatischen Durchgang des Zugrohrzylinders über die Kolbenplatte durch die Kolbenstangen zu gewährleisten.

Zusätzlich besitzt die Kolbenplatte eine Arretierungsaufgabe, welche dazu dient, während des Beschleunigungsvorgangs ein Ausfahren des Deichselelementes gegenüber dem Zugrohrelementes zu verhindern.

Vorteilhaft dienen die beiden jeweils im Zug- und Deichselrohr gebildeten Zylinder, durch die komprimierte Luft, verbunden mit einer beispielhaften Druckfeder, einer positiven Dämpfung der beiden Elemente gegenüber beim Bremsvorgang.

Während des Bremsvorgangs bildet sich durch die gegenseitige Hubbewegung der Elemente zwischen der Rückseite des Deichselrohrkolbens und der inneren hinteren Zugrohrzylinderplatte ein zusätzlicher Luftraum, welcher seine Luftzuführung über die angedachten Luftkanäle durch den Zugrohrzylinder bzw. Deichselrohrzylinder erhält.

Funktional wichtig ist, dass die unteren Luftzuführungslöcher der Kolbenstangen durch den Zylinderboden des Zugrohres verschlossen sind.

Damit ist gewährleistet, dass bei einem folgenden Beschleunigungsvorgang die durch den Deichselrohrkolben komprimierte Luft im hubmäßig gebildeten dritten Luftzylinder kein schließen der Bremsanlage durch die Luftzuführungslöcher durchführen kann.

Konstruktiv dient die zwischen dem Rückwärtigen Deichselrohrkolben und dem Zugrohrzylinderboden komprimierte Luft einer Dämpfung der beiden Elemente gegeneinander beim Beschleunigungsvorgang.

Um diese Dämpfung in jeder Beschleunigungssituation positiv durch die gegenseitige hubmäßige Elementverschiebung zu steuern, ist das Deichselführungsrohr mit einem Langloch ausgestattet, damit je nach Stellung des Entlüftungsloches der Zugstange ein gesteuertes Luftablassverhalten de3s Anfahrdämpfzylinder gewährleistet ist.

Im Deichselrohr werden diese beiden Luftkanäle vereint, so dass sich eine pneumatische Luftleitung integriert, welche der Bedienung einer beispielhaft angeschlossenen Bremse dient.

Der Erfindungsgedanken beschreibt somit die Bildung von drei unabhängig voneinander wirkenden Luftzylinder mit ihren entsprechenden Luftzuführungskanälen, welche sich mechanisch bedingt durch die gegenseitigen hubähnlichen ElementVerschiebungen beim Anfahren oder Bremsen jeweils öffnen oder schließen.

In Folge des mechanisch gesteuerten Funktionsablaufes, welcher sich zwischen den Brems- und Beschleunigungsvorgängen ergibt, wird die Luftzufuhr zu den aufgeführten pneumatischen Zylindern zwangsgesteuert.

Dieser führt dazu, dass Luft durch die geöffneten Luftkanäle in den Zugrohrzylinder und den Deichselrohrzylinder strömen kann. Die jeweils aufgeführten Luftkanäle der Deichselrohrführung werden gleichfalls über die Luftöffnungen an den Kolbenführungsstangen mit Luft gefüllt.

Es besteht die Möglichkeit, durch eine beispielhaft integrierte Feder mit den entsprechenden Kennwerten innerhalb der beschriebenen Zylinder den beiden Elementen gegenüber automatisch eine neutrale Stellung bei einer Vorwärtsfahrt ohne Bremsung, oder im Stillstand sicher zu stellen.

Dieser mechanische Zustand entspricht technisch einer automatischen Nivellierung.

Die neutral nivellierte geöffnete Bremssituation ist wichtig, um ein Rückwärtsfahren des Gespannes ohne negative Bremsbetätigung zu ermöglichen.

In einer weiteren vorteilhaften Ausgestaltung schlägt die Erfindungsidee vor, die jeweiligen Luftausgänge der beiden Elemente, innerhalb der gegenseitigen hubähnlichen Bewegungen, beispielhaft über Magnetventile zu öffnen oder zu schlie-ßen.

Die Folge eines gesperrten Luftaustrittes des Zylinders ermöglicht auch mit dem Gespann eine beträchtliche Steigung rückwärts zu fahren, ohne dass die Bremse mit einem Schließvorgang reagiert.

Diese Anwendung ermöglicht das System in die elektrische Bordversorgung zu integrieren, so dass bei einem Rückwärtsfahren des Gespannes, über den gegebenen elektrischen Kreislauf, eine automatische Bedienung möglich ist.

Zusätzlich ist im Erfindungsgedanken die Integration einer Druckspeichereinheit integriert, um einen Überdruck des Systems zu speichern bzw. einer anderen beispielhaften Verwendung zuzuführen.

Ein jeweiliges Ausführungsbeispiel der Erfindung wird auf den nachfolgenden beigefügten Zeichnungen beschrieben.

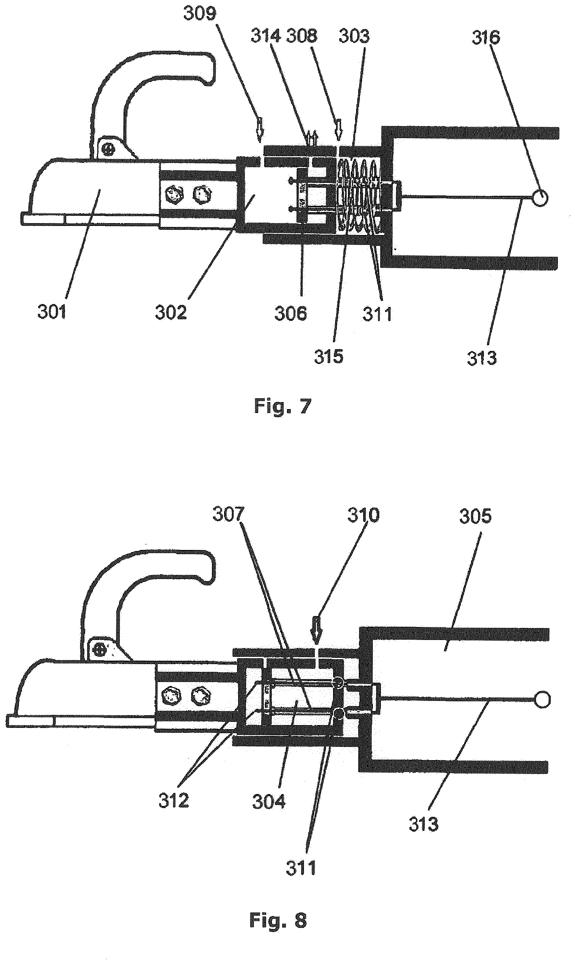

Fig. 7: Die Darstellung zeigt die Auflaufbremseinrichtung in geöffnetem Zustand. Es ist das Zugrohr (301) mit Anhängekupplung mit dem integrierten Bremszylinder (302) sowie dem Lufteinlass (309) für den Bremszylinder (302) und dem sich durch den Deichselrohrkolben (306) bildenden Zylinderraum (302) aufgezeigt. Der Deichselrohrkolben (306) wird durch die zwei mit dem Deichselrohr (305) verbundenen Kolbenstangen (307) zusammen mit der beispielhaften Nivellierungsfeder (315) gezeichnet. Zusätzlich ist der Lufteinlass (311) in den Kolbenstangen (307) zusammen mit der Luftleitung (313) aufgeführt. In der Deichselstange (305) ist ein Druckspeicher (316) mit einem beispielhaften Magnetventil (316) gezeichnet, dazu ist ein Langlochentlüftungsloch (314) innerhalb der Deichselrohrführung (305) aufgeführt, welches dem Entlüften des Anfahrzylinders (304) dient.

Fig. 8: Die Darstellung zeigt die Auflaufbremseinrichtung in geschlossenen Zustand, das heißt im Bremszustand. Hier ist das Deichselrohr (305) in das Zugrohr (301) gefahren. Es sind die Bremszylinder (302, 303) sowohl in Zug- als auch im Deichselrohr (301, 305) in komprimierten Zustand. Der Deichselrohrkolben (306) verschließt zusätzlich das Belüftungsloch (311) des Lufteinlasses für den Zugrohr-bremszylinder (302). Der Anfahrdämpfzylinder (34) wird durch die Belüftungsöffnung (310), welche durch das Deichselrohr (305) führt, gelüftet. Die beiden Lufteinlässe (311) für die Kolbenstangen (307) befinden sich im Zugrohrzylinder-Boden (302), so dass der Anfahrdämpfzylinder (304) gegenüber der Bremsanlage (313) gesperrt ist. Somit kann kein pneumatischer Druck in die Luftleitung (313) geführt werden.

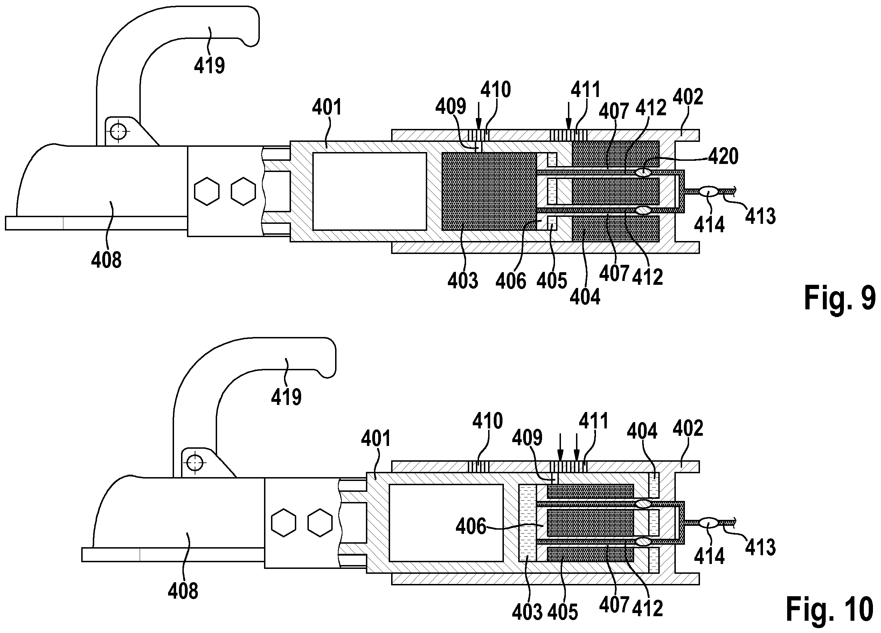

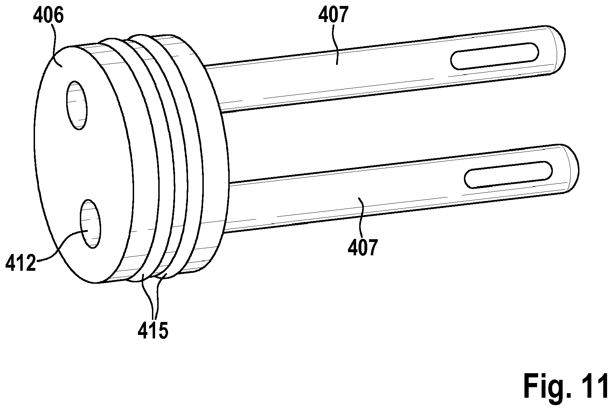

In den Figuren 9-15 sind weitere Ausführungsbeispiele einer Auflaufbremsvorrichtung für einen Anhänger gezeigt. Die Auflaufbremsvorrichtung weist allgemein wenigstens ein Zugrohr 401 und wenigstens ein Deichselrohr 402 auf, die ineinander längsverschieblich angeordnet sind. Insbesondere kann in bevorzugten Ausführungsformen, wie sie beispielsweise in den Figuren 9-15 dargestellt sind, das Zugrohr 401 innerhalb des Deichselrohrs 402 gleitend geführt sein. Dabei ist das Zugrohr 401 vorzugsweise gegenüber dem Deichselrohr 402 abgedichtet.

Insgesamt wird auf diese Weise eine Auflaufbremsvorrichtung bereitgestellt, die Umgebungsluft nutzt, um eine Dämpfwirkung zu erzielen. Dabei erfolgt die Dämpfwirkung einerseits zum Auslösen der Radbremsen am Anhänger und andererseits zur Anfahrtsdämpfung beim Anfahren des Zugfahrzeugs bzw. gesamten Fahrzeuggespanns. Die Funktionsweise der hier beschriebenen Luftdruckauflaufbremsvorrichtung ist insbesondere bei dem Ausführungsbeispiel gemäß Figuren 9 und 10 gut erkennbar.

Fig. 9 zeigt eine Querschnittsansicht einer Auflaufbremsvorrichtung in einem ungebremsten Zustand. Die Auflaufbremsvorrichtung umfasst ein Zugrohr 401 und ein Deichselrohr 402, wobei das Zugrohr 401 gleitend innerhalb des Deichselrohrs 402 geführt ist. Das Zugrohr 401 ist gegenüber dem Deichselrohr 402 abgedichtet.

Das Zugrohr 401 zeigt einen Kupplungskopf 408, der in handelsüblicher Weise mit einem Lösehebel 419 versehen ist. Innerhalb des Zugrohrs 401 ist ein erster Luftzylinder 403 ausgebildet, der seitlich wenigstens einen ersten Luftkanal 409 bildet. Der erste Luftkanal 409 ist als Öffnung in einer Zylinderaußenwand des Zugrohrs 401 ausgebildet.

Innerhalb des ersten Luftzylinders 403 ist ein Kolben 406 positioniert, der gegenüber der Innenwand des ersten Luftzylinders 403 abgedichtet ist. Der Kolben 406 umfasst zwei Kolbenstangen 407, die durch Öffnungen im Boden des ersten Luftzylinders 403 bzw. des Zugrohrs 401 hindurchgeführt und fest mit einem Boden des Deichselrohrs 402 verbunden sind. Die Kolbenstangen 407 umfassen jeweils einen Luftdurchgang 412, der in den ersten Luftzylinder 403 mündet.

Wie in Fig. 9 gut erkennbar ist, ist das Zugrohr 401 in einer gegenüber dem Deichselrohr 402 ausgefahrenen Stellung dargestellt. Der Boden des Zugrohrs 401 schlägt dabei nahezu oder tatsächlich am Kolben 406 an. Der Kolben 406 bildet insoweit einen Anschlag, der ein vollständiges Lösen des Zugrohrs 401 vom Deichselrohr 402 verhindert.

Die beiden Luftdurchgänge 412 der Kolbenstangen 407 sind mit einer Bremsleitung 413 verbunden, die ein Überdruckventil 414 aufweist. Das Überdruckventil 414 ist außerhalb des Deichselrohrs 402 angeordnet. Die Bremsleitung 413 führt vorzugsweise zu pneumatisch aktivierbaren Radbremsen, so dass durch die Luftdurchgänge 412 strömende Luft unmittelbar als pneumatisches Übertragungsmittel zum Auslösen der Radbremsen eingesetzt werden kann.

Die Auflaufbremsvorrichtung umfasst einen weiteren, dritten Luftzylinder 405, der zwischen dem Kolben 406 und dem Boden des Zugrohrs 401 ausgebildet ist. Insgesamt sind also drei Luftzylinder 403, 404, 405 ausgebildet, deren Volumen sich je nach Zustand der Auflaufbremsvorrichtung ändert. Im ungebremsten Zustand, der in Fig. 9 dargestellt ist, weisen der erste Luftzylinder 403 und der zweite Luftzylinder 404 vergleichsweise große, vorzugsweise maximale, Volumina auf. Der dritte Luftzylinder 405 nimmt im ungebremsten Zustand sein Minimalvolumen ein. Im gebremsten Zustand, der in Fig. 10 dargestellt ist, weist der dritte Luftzylinder 405 sein Maximalvolumen auf. Der erste Luftzylinder 403 und der zweite Luftzylinder 404 haben in diesem Zustand hingegen ihr geringstes Volumen.

In diesem Zusammenhang wird darauf hingewiesen, dass für alle Ausführungsbeispiele der vorliegenden Anmeldung gilt, dass das Zugrohr 401 und das Deichselrohr 402 nicht zwingend zylinderförmig ausgebildet sein müssen. Vielmehr sind auch mehreckige Querschnittsformen des Zugrohrs 401 und des Deichselrohrs 402 möglich. Folglich können die Luftzylinder 403, 404, 405 als Zylinder mit einer mehreckigen Mantelfläche ausgebildet sein.

Wie in den Figuren 9 und 10 gut erkennbar ist, weist das Deichselrohr an seinem Außenumfang zwei in längsaxialer Richtung voneinander angeordnete Luftkanäle 410, 411 auf. Insbesondere sind ein zweiter Luftkanal 410 und ein dritter Luftkanal 411 vorgesehen. Diese Luftkanäle 410, 411 sind vorzugsweise als Öffnungen in einer Zylindermantelfläche des Deichselrohrs 402 ausgebildet. Dabei ist der zweite Luftkanal 410 näher am längsaxialen, in Fahrtrichtung vorderen, Ende des Deichselrohrs 402 angeordnet als der dritte Luftkanal 411. Der zweite Luftkanal 410 und der dritte Luftkanal 411 können mittels eines Filtereinsatzes, beispielsweise eines Luftfilters verschlossen sein, um das Eindringen von Fremdpartikeln in die Auflaufbremsvorrichtung zu vermeiden.

Der zweite Luftkanal 410 ist vorzugsweise als kreisrunde Öffnung ausgebildet. Der dritte Luftkanal 411 kann hingegen als Langloch ausgebildet sein, dessen Längserstreckung parallel zur Längsachse des Deichselrohrs 402 verläuft.

Die Funktionsweise der Auflaufbremsvorrichtung ist in den Figuren 9 und 10 gut erkennbar. Im ungebremsten Zustand gemäß Fig. 9 sind der zweite Luftkanal 410 und der erste Luftkanal 409 deckungsgleich, so dass Umgebungsluft in den ersten Luftzylinder 403 einströmen kann. Ebenso ist der dritte Luftkanal 411 zum zweiten Luftzylinder 404 geöffnet bzw. nicht durch das Zugrohr 401 verdeckt. Insofern kann auch hier Umgebungsluft in den zweiten Luftzylinder 404 einströmen. Der erste Luftzylinder 403 und der zweite Luftzylinder 404 wirken so als Bremszylinder und die darin eingeströmte Luft als Dämpfungsmedium. Das bedeutet konkret, dass beim Auflaufen des Anhängers auf ein Zugfahrzeug das Zugrohr 401 in das Deichselrohr 402 eingeschoben wird. Dadurch gelangen der erste Luftkanal 409 und der zweite Luftkanal 410 in eine Stellung, in welcher sie nicht mehr deckungsgleich sind. Der erste Luftzylinder 403 ist damit verschlossen, so dass die darin enthaltene Luft nicht mehr in die Umgebung ausweichen kann. Die Luft muss den ersten Luftzylinder 403 vielmehr über die Luftdurchgänge 412 im Kolben 406 bzw. den Kolbenstangen 407 verlassen und wird so in die Bremsleitung 413 gedrängt. Über die Bremsleitung 413 wird der erforderliche pneumatische Bremsdruck aufgebaut, um die Radbremsen zu betätigen.

Um die Bremswirkung zu erhöhen, kann vorgesehen sein, dass die Kolbenstangen 407 im Bereich der Verbindung zur Bremsleitung 413 seitliche Einlassöffnungen 420 aufweist. Wenn nun das Zugrohr 401 weit genug in das Deichselrohr 402 eingeschoben ist, verdeckt das Zugrohr 401 auch den dritten Luftkanal 411, so dass der zweite Luftzylinder 404 zur Umgebung hin geschlossen ist. Die im zweiten Luftzylinder 404 enthaltene Luft kann dann nur über die Einlassöffnungen 420 der Kolbenstage 407 aus dem zweiten Luftzylinder 404 entweichen. Dadurch wird die Luft aus dem zweiten Luftzylinder 404 zusätzlich in die Bremsleitung 413 gedrückt und verstärkt damit den Bremsdruck.

Alternativ kann vorgesehen sein, dass der zweite Luftzylinder 404 vollständig hermetisch abgeschlossen ist, wenn das Zugrohr 401 den dritten Luftkanal 411 verdeckt. Dann wirkt die im zweiten Luftzylinder 404 enthaltene Luft als Dämpfer und dämpft so die Schiebebewegung des Zugrohrs 401 in das Deichselrohr 402. So kann effizient verhindert werden, das das Zugrohr 401 lautstark mit dem Deichselrohr 402 kollidiert.

Eine weitere alternative Gestaltung besteht darin, dass das Zugrohr 401 und das Deichselrohr 402 nicht vollständig gegeneinander abdichten. Vielmehr können gezielt Durchströmkanäle vorgesehen sein, die es der Luft im zweiten Luftzylinder 404 erlauben, aus dem zweiten Luftzylinder 404 auszutreten. Die Kanäle können auch dadurch gebildet sein, dass zwischen dem Zugrohr 401 und dem Deichselrohr 402 ein minimaler Spalt besteht. Dabei dient der Durchströmkanal bzw. der Spalt als Drosselventil, so dass die im zweiten Luftzylinder 404 enthaltene Luft nur langsam entweicht und so weiterhin eine Dämpfungswirkung entfaltet.

Sobald das Zugrohr 401 vollständig in das Deichselrohr 402 eingetaucht ist, befindet sich die Auflaufbremsvorrichtung im vollgebremsten Zustand, wie beispielhaft in Fig. 10 dargestellt ist. Im vollgebremsten Zustand gelangt nun der erste Luftkanal 409 im Zugrohr 401 in eine Position, in welchem er deckungsgleich mit dem dritten Luftkanal 411 des Deichselrohrs 402 angeordnet ist. Auf diese Weise besteht eine Luftverbindung zwischen dem dritten Luftzylinder 405 und der Umgebung. So kann Umgebungsluft in den dritten Luftzylinder 405 eindringen. Der dritte Luftzylinder 405 wirkt dann beim Anfahren des Zugfahrzeugs als Anfahrdämpfer.

Konkret ist vorgesehen, dass beim Anfahren des Zugfahrzeugs das Zugrohr 401 aus dem Deichselrohr 402 gezogen wird. Dabei bewegt sich der erste Luftkanal 409 in eine Position zwischen dem zweiten Luftkanal 410 und dem dritten Luftkanal 411 und wird so durch das Deichselrohr 402 verschlossen. Die im dritten Luftzylinder 405 enthaltene Luft kann dann nur schwer oder überhaupt nicht entweichen. Infolgedessen wird die im dritten Luftzylinder 405 enthaltene Luft komprimiert und dämpft somit die Anfahrtbewegung ab. Das verhindert ein Ruckeln beim Anfahren eines Gespanns, insbesondere aus dem Stand.

Um die Auflaufbremsvorrichtung möglichst kostengünstig gestalten zu können, ist bevorzugt vorgesehen, dass standardisierte, in Großserienfertigung bereits erhältliche Bauteile verwendet werden. Vor diesem Hintergrund steht die Idee, den Kolben 406 mit handelsüblichen Kolbenringen 415 auszustatten, um eine Abdichtung zum Zugrohr 401 zu erreichen. Dabei können handelsübliche Kolbenringe 415 eingesetzt werden, die üblicherweise zum Abdichten von Kolben in Zylindern einer Verbrennungskraftmaschine verwendet werden. Derartige Kolbenringe 415 sind frei und in hohen Stückzahlen am Markt erhältlich und entsprechend kostengünstig.

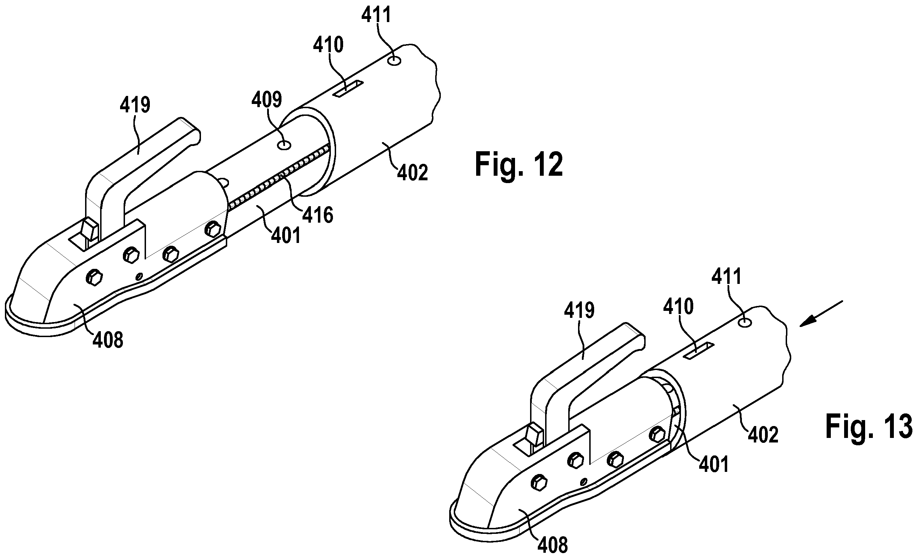

In Fig. 12 und 13 ist eine Auflaufbremsvorrichtung gezeigt, die im Wesentlichen ähnlich aufgebaut und funktionsfähig ist, wie die Auflaufbremsvorrichtung gemäß Figuren 9 und 10. Im Wesentlichen umfasst die Auflaufbremsvorrichtung ein Zugrohr 401 und ein Deichselrohr 402. Im Zugrohr 401 ist ein erster Luftkanal 409 angeordnet, der in einen ersten Luftzylinder 403 mündet. Das Deichselrohr 402 weist einen zweiten Luftkanal 410 und einen dritten Luftkanal 411 auf. Der zweite Luftkanal 410 ist als Langloch ausgebildet und kann über den ersten Luftkanal 409 eine Luftverbindung zum ersten Luftzylinder 403 im Zugrohr 401 herstellen. Der dritte Luftkanal 411 ist als runde Bohrung ausgebildet und kann entweder eine Luftverbindung zum zweiten Luftzylinder 404 im Deichselrohr 402 herstellen oder über den ersten Luftkanal 409 eine Luftverbindung zum dritten Luftzylinder 405 ausbilden, der im Zugrohr 401 zwischen dem Kolben 406 und einem Zugrohrboden ausgeformt ist.

In Fig. 12 ist zusätzlich erkennbar, dass das Zugrohr 401 mit dem Deichselrohr 402 vorzugsweise über ein Linearkugellager 416 gleitend gelagert ist. Das Linearkugellager ermöglicht eine sanfte und gleichmäßige Bewegung zwischen dem Zugrohr 401 und dem Deichselrohr 402. Das Linearkugellager 416 ist vorzugsweise an einer Außenumfangsfläche des Zugrohrs 401 angeordnet und erstreckt sich parallel zur Längsachse des Zugrohrs 401. Im Deichselrohr 402 ist eine entsprechende Aufnahmenut vorgesehen, die das Kugellager führend aufnimmt. Fig. 12 zeigt in diesem Zusammenhang den ungebremsten Zustand der Auflaufbremseinrichtung, so dass das Zugrohr 401 aus dem Deichselrohr 402 herausgezogen ist. Das Linearkugellager 416 ist damit gut erkennbar.

In Fig. 13 ist der vollgebremste Zustand der Auflaufbremsvorrichtung gezeigt, bei welchem das Zugrohr 401 nahezu vollständig in das Deichselrohr 402 eingetaucht ist.

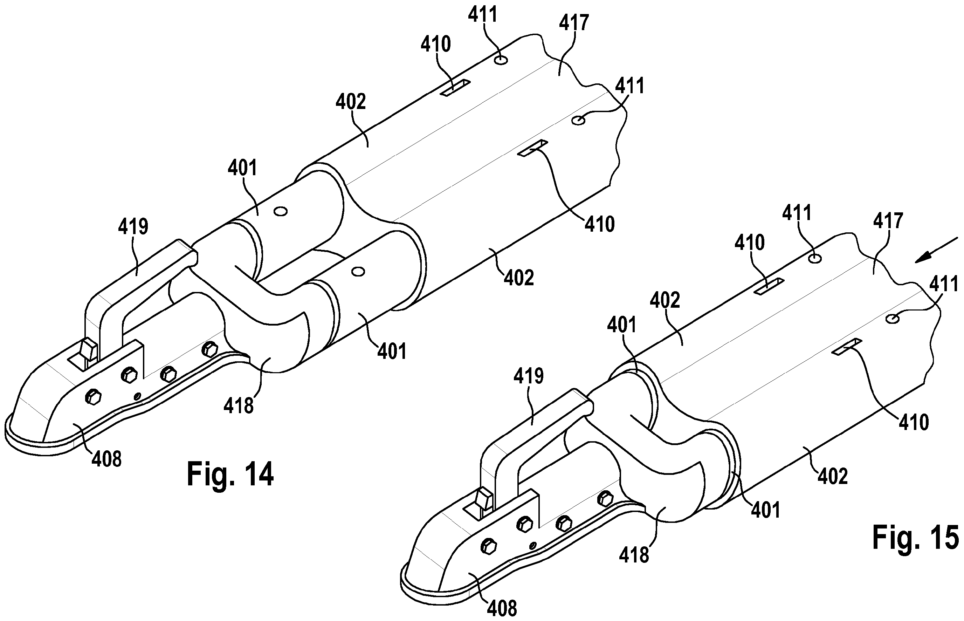

Die Figuren 14 und 15 zeigen eine alternative Gestaltung der Auflaufbremsvorrichtung, die sich in den wesentlichen Elementen nicht von der Auflaufbremsvorrichtung gemäß Figuren 12 und 13 unterscheidet. Der Unterschied besteht lediglich darin, dass bei dem Ausführungsbeispiel gemäß Figuren 14 und 15 ein Deichselrohrelement 417 vorgesehen ist, welches zwei Deichselrohre 402 ausbildet. Entsprechend sind zwei Zugrohre 401 vorgesehen, die in die jeweiligen Deichselrohre 402 des Deichselrohrelements 417 eintauchen. Die Zugrohre 401 sind mit einem Zugrohrverbindungselement 418 miteinander verbunden. Das Zugrohrverbindungselement 418 koppelt die parallel zueinander ausgebildeten Zugrohre 401 und verbindet diese mit dem Kupplungskopf 408.

Im Wesentlichen zeigen die Figuren 14 und 15 also eine Doppelhubvariante der Auflaufbremsvorrichtung gemäß Figuren 12 und 13. Eine solche Doppelhubvariante kann höhere Bremsdrücke erzeugen und eignet sich daher insbesondere für höherlastige Anhänger, insbesondere Schwerlastanhänger.

### Bezugszeichenliste

- 101: Zugrohr
- 102: Deichselrohr
- 103: Hydraulischer Zugrohrzylinder
- 104: Kolben (Hydraulisch, Deichselrohr geführt)
- 105: Kolbenstange
- 106: Deichsel-Druckfeder
- 107: Deichselrohr Langloch für Fluid-Leitung
- 108: Luftkammer für Zug-Deichselrohr
- 109: Luftkanal für Deichselrohrzylinder
- 110: Luftkanal für Deichselrohr
- 111: Auslass für hydraulische Leitung Zugrohr
- 112: Zugstangen-Pralltopf

- 201: Zugrohr mit Anhängekupplung
- 202: Deichselrohr mit Anhängerverbindung
- 203: Bowdenzug-Anschlag
- 204: Deichselrohr mit ummantelter Bowdenzug-Führung
- 205: Bowdenzug geführt in Deichselrohr
- 206: Zug- und Druckfeder zwischen Zug- und Deichselrohr
- 207: Faltenbalg
- 208: Luftkammer mit Luftkanal durch Zug- und Deichselrohr
- 209: Luftkanal für Deichselrohrzylinder
- 210: Bowdenzug
- 211: Zugstangenpralltopf gegenüber Deichselstange
- 212: Innere pneumatische Zylinder
- 213: Bowdenzug-Führung in Deichselrohr
- 214: Langlochführung für Bowdenzug im Zugrohr
- 215: Bowdenzug Kniehebel-Integrierung
- 216: Bowdenzug betätigter Hydraulikzylinder
- 217: Hydraulische Radbremszylinder für Trommelbremse
- 218: Deichselrohr mit Kolbenstangenverlängerung
- 219: Verbindungsteil Bowdenzug-Handbremse/Notbremse
- 220: Hydraulische Verbindungsleitung
- 301: Zugrohr mit Anhängekupplung
- 302: Bremszylinder im Zugrohr
- 303: Bremszylinder im Deichselrohr
- 304: Anfahrdämpfzylinder
- 305: Deichselrohr
- 306: Deichselrohrkolben
- 307: Hohle Deichselrohrkolben-Führungsstangen
- 308: Lufteinlass für Deichselrohr-Bremszylinder
- 309: Lufteinlass für Zugrohr-Bremszylinder
- 310: Lufteinlass für Anfahrdämpfer
- 311: Lufteinlass für Kolbenstangen
- 312: Lufteinlass am Deichselrohrkolben
- 313: Luftleitung für Bremsanschluss
- 314: Langloch-Entlüftung Anfahrzylinder
- 315: Nivellierungsfeder
- 316: Druck-Speicher und Magnetventil

- 401: Zugrohr
- 402: Deichselrohr
- 403: erster Luftzylinder
- 404: zweiter Luftzylinder
- 405: dritter Luftzylinder
- 406: Kolben
- 407: Kolbenstange
- 408: Kupplungskopf
- 409: erster Luftkanal
- 410: zweiter Luftkanal
- 411: dritter Luftkanal
- 412: Luftdurchgang
- 413: Bremsleitung
- 414: Überdruckventil
- 415: Kolbenringe
- 416: Linearkugellager
- 417: Deichselrohrelement
- 418: Zugrohrverbindungselement
- 419: Lösehebel
- 420: Einlassöffnung

## Patentansprüche

1. Auflaufbremsvorrichtung für einen Anhänger mit einem Zugrohr (101, 401) und einem Deichselrohr (102, 402), das längs hubmäßig im oder um das Zugrohr (101, 401) gleitend geführt und gelagert ist sowie fest mit dem Anhänger in Verbindung steht, wobei das Zugrohr (101, 401) und das Deichselrohr (102, 402) durch eine hubähnliche gegenseitige Bewegung drei Luftzylinder (403, 404, 405) bilden, **dadurch gekennzeichnet, dass** in jedem der Luftzylinder (403, 404, 405) Luftkanäle (109, 110, 409, 410, 411) integriert sind, die sich mechanisch bedingt durch die gegenseitige hubähnliche Verschiebung zwischen Zugrohr (101,401) und Deichselrohr (102, 402) öffnen und/oder schließen.

2. Auflaufbremsvorrichtung nach Anspruch 1,
**dadurch gekennzeichnet, dass**
das Zugrohr (101, 301, 401) einen Zugrohrluftzylinder (103, 302, 403) und das Deichselrohr (102, 305, 402) einen Deichselrohr-Luftzylinder (303, 404) bilden.

3. Auflaufbremsvorrichtung nach Anspruch 1 oder 2,
**dadurch gekennzeichnet, dass**
zusätzlich ein hydraulischer Zugrohrzylinder (103) mit Kolben (104) integriert ist.

4. Auflaufbremsvorrichtung nach einem der vorhergehenden Ansprüche,
**dadurch gekennzeichnet, dass**
das Zusammenwirken von Zug- und Deichselrohr (101, 102, 401, 402) je nach Fahrzustand drei synchron arbeitende Luftzylinder bildet, in welchen das Deichselrohr (102, 402) mindestens eine doppelte Kolbenfunktion innerhalb des Zugrohres tätigt.

5. Auflaufbremsvorrichtung nach einem der vorhergehenden Ansprüche,
**dadurch gekennzeichnet, dass**
das Zug- und das Deichselrohr (101, 102, 401, 402) über Luftkanäle (109, 110, 409, 410, 411) verfügen, welche die gebildeten Luftzylinder (403, 404, 405) während ihrer Hubbewegung mit Luft versorgen, so dass diese eine Art pneumatischer Arbeit verrichten.

6. Auflaufbremsvorrichtung nach einem der vorhergehenden Ansprüche,
**dadurch gekennzeichnet, dass**
der Luftkanal (109, 412) des Deichselrohrs (102, 402) bei geöffnetem Bremszustand offen ist, während bei einem Bremsvorgang durch das Einfahren des Deichselrohres (102, 402) in das Zugrohr (101, 401) dieses abgedichtet und geschlossen ist.

7. Auflaufbremsvorrichtung nach einem der vorhergehenden Ansprüche,
**dadurch gekennzeichnet, dass**
der Luftkanal (409) des Zugrohres (101, 401) synchron mit dem Luftkanal (109, 412) des Deichselrohres (102, 402) durch das gegenseitige Einfahren verschließbar ist.

8. Auflaufbremsvorrichtung nach einem der vorhergehenden Ansprüche,
**dadurch gekennzeichnet, dass**
wenigstens zwei Luftzylinder (403, 404) mit Druck- bzw. Zugfedern (106) ausgestattet sind, welche die entsprechenden Federkennwerte besitzen, um das Deichselrohr (102, 402) mit den integrierten Zylindern selbstständig durch Federdruck in einen Zustand gegenüber dem Zugrohr (101, 401) zu versetzen, welcher einer geöffneten Bremse entspricht.

9. Auflaufbremsvorrichtung nach einem der vorhergehenden Ansprüche,
**dadurch gekennzeichnet, dass**
dass das Deichselrohr (305, 402) mit einer oder mehrerer hohlen luftführenden Kolbenstange(n) (307, 407) ausgeführt ist, welche durch abgedichtete Führungen in den Zugrohr-Zylinder (302, 401) geführt sind, um einen befestigten vom Deichselrohr (305, 402) bewegten Arbeitskolben (306, 406) zum pneumatischen Druckaufbau bzw. Bremsbetätigung zu integrieren.

10. Auflaufbremsvorrichtung nach Anspruch 9,
**dadurch gekennzeichnet, dass**
der luftführende Deichselrohr-Kolben (306, 406) mit Lufteinlassöffnungen (311, 420) ausgestattet ist, welche sich während des Bremsvorganges durch ihre Position innerhalb des Zugrohrzylinderbodens zwangsweise verschließen, so dass beim Beschleunigungsvorgang kein pneumatischer Anfahrdämpferdruck in das Bremssystem (313, 413) geleitet werden kann.

11. Auflaufbremsvorrichtung nach einem der vorhergehenden Ansprüche,
**dadurch gekennzeichnet, dass**
die Deichselrohr-Kolbenstange (307, 407) im Zugrohrzylinder über einen Luftdurchgang (312, 412) verfügt, welcher dazu dient, den pneumatischen Druck über den Deichselrohr-Kolben (306, 406) durch die Kolbenstangen (307, 407) zu der jeweilig angeschlossenen Bremse (313) zu führen.

12. Auflaufbremsvorrichtung nach einem der vorhergehenden Ansprüche,
**dadurch gekennzeichnet, dass**
bei einem geschlossenen Systemzustand das Deichselrohr (305, 402) mit seiner vorderen Druckplatte in das Zugrohr (302, 401) geschoben ist, so dass sich zwischen der Innenseite des Deichselrohrzylinders (305, 404) gegenüber dem Zugrohrzylinder (304, 403) ein durch einen zusätzlichen Luftkanal (310, 409) versorgter Zylinder-Prallraum (304, 405) bildet.

13. Auflaufbremsvorrichtung nach einem der vorhergehenden Ansprüche,
**dadurch gekennzeichnet, dass**
das Deichselzylinderrohr (305, 402) mit einer Langloch ähnlichen Entlüftung (314) ausgestattet ist, um während des Beschleunigungsvorganges den aufgebauten pneumatischen Druck hubmäßig gesteuert abzuführen.

14. Auflaufbremsvorrichtung nach einem der vorhergehenden Ansprüche,
**dadurch gekennzeichnet, dass**
der Luftkanal (308, 412) des Deichselrohrzylinders (303, 402) bei geöffnetem Bremszustand offen ist, während bei einem Bremsvorgang durch das Einfahren des Deichselrohres (305, 402) in das Zugrohr (302, 401) dieser zwangsgesteuert abgedichtet und geschlossen ist.

15. Auflaufbremsvorrichtung nach einem der vorhergehenden Ansprüche,
**dadurch gekennzeichnet, dass**
der Luftkanal (309, 409) des Zugrohres (302, 401) synchron mit dem Luftkanal (308, 411) der Deichselstange (305, 402) durch das gegenseitige Einfahren verschließbar ist.

## Claims

1. An overrun brake device for a trailer with a draw tube (101, 401) and a drawbar tube (102, 402), which is guided and supported in a longitudinally stroke-like and sliding manner in or around the draw tube (101, 401) and is firmly connected to the trailer, wherein the draw tube (101, 401) and the drawbar tube (102, 402) form three air cylinders (403, 404, 405) due to a reciprocal stroke-like movement, **characterized in that**, in each of the air cylinders (403, 404, 405), air ducts (109, 110, 409, 410, 411) are integrated, which open and/or close due to the stroke-like shift between the draw tube (101, 401) and the drawbar tube (102, 402) .

2. The overrun brake device according to Claim 1,
**characterized in that**
the draw tube (101, 301, 401) forms a draw tube air cylinder (103, 302, 403) and the drawbar tube (102, 305, 402) forms a drawbar tube air cylinder (303, 404).

3. The overrun brake device according to Claim 1 or 2,
**characterized in that**
additionally, a hydraulic draw tube cylinder (103) with pistons (104) is integrated.

4. The overrun brake device according to any one of the preceding claims,
**characterized in that**
the interaction of the draw tube and the drawbar tube (101, 102, 401, 402) forms three synchronously operating air cylinders, depending on the driving condition, in which the drawbar tube (102, 402) operates at least one double piston function within the draw tube.

5. The overrun brake device according to any one of the preceding claims,
**characterized in that**
the draw tube and the drawbar tube (101, 102, 401, 402) have air ducts (109, 110, 409, 410, 411), which supply the formed air cylinders (403, 404, 405) with air during their stroke movement so that they perform a kind of pneumatic operation.

6. The overrun brake device according to any one of the preceding claims,
**characterized in that**
the air duct (109, 412) of the drawbar tube (102, 402) is open when the brake is in an open state while, in the case of braking operation, this is sealed and closed due to the retraction of the drawbar tube (102, 402) into the draw tube (101, 401).

7. The overrun brake device according to any one of the preceding claims,
**characterized in that**
the air duct (409) of the draw tube (101, 401) can be sealed synchronously with the air duct (109, 412) of the drawbar tube (102, 402) due to the reciprocal retraction.

8. The overrun brake device according to any one of the preceding claims,
**characterized in that**
at least two air cylinders (403, 404) are equipped with compression or tension springs (106), which have the corresponding spring characteristics in order to autonomously set the drawbar tube (102, 402) along with the integrated cylinders into a state opposite the draw tube (101, 401) by means of spring pressure, which corresponds to an open brake.

9. The overrun brake device according to any one of the preceding claims,
**characterized in that**
the drawbar tube (305, 402) is designed with one or a plurality of hollow air-bearing piston rod(s) (307, 407), which are guided through sealed ducts into the draw tube cylinder (302, 401) in order to integrate an attached working piston (306, 406) moved by the drawbar tube (305, 402) for the pneumatic pressure build-up or brake actuation.

10. The overrun brake device according to Claim 9,
**characterized in that**
the air-bearing drawbar tube piston (306, 406) is equipped with air inlet openings (311, 420), which are forcibly sealed during the braking operation due to their position within the draw tube cylinder base so that no pneumatic start-up dampener pressure can be led into the brake system (313, 413) during the acceleration process.

11. The overrun brake device according to any one of the preceding claims,
**characterized in that**
the drawbar tube piston rod (307, 407) in the draw tube cylinder has an air passage (312, 412), which serves to guide the pneumatic pressure through the piston rods (307, 407) to the respectively connected brake (313) via the drawbar tube piston (306, 406).

12. The overrun brake device according to any one of the preceding claims,
**characterized in that**
in the case of a closed system state, the drawbar tube (305, 402) with its front pressure plate is pressed into the draw tube (302, 401) so that a cylinder impact space (304, 405) supplied by an additional air duct (310, 409) is formed between the inner side of the drawbar tube cylinder (305, 404) opposite the draw tube cylinder (304, 403).

13. The overrun brake device according to any one of the preceding claims,
**characterized in that**
the drawbar cylinder tube (305, 402) is equipped with a vent (314) similar to an elongated hole in order to dissipate the built up pressure in a stroke-like controlled manner during the acceleration process.

14. The overrun brake device according to any one of the preceding claims,
**characterized in that**
the air duct (308, 412) of the drawbar cylinder (303, 402) is open when the brake is in an open state while, in the case of braking operation, this is sealed and closed in a positively controlled manner due to the retraction of the drawbar tube (305, 402) into the draw tube (302, 401).

15. The overrun brake device according to any one of the preceding claims,
**characterized in that**
the air duct (309, 409) of the draw tube (302, 401) can be sealed synchronously with the air duct (308, 411) of the drawbar rod (305, 402) due to the reciprocal retraction.

## Revendications

1. Dispositif de frein à inertie destiné à une remorque, pourvu d'un tube de traction (101, 401) et d'un tube de timon (102, 402), qui est guidé en coulissement et en course longitudinale et logé dans ou autour du tube de traction (101, 401) et qui est en liaison fixe avec la remorque, le tube de traction (101, 401) et le tube de timon (102, 402) formant par un déplacement réciproque analogue à une course trois cylindres pneumatiques (403, 404, 405), **caractérisé en ce que** dans chacun des cylindres pneumatiques (403, 404, 405) sont intégrés des conduits d'air (109, 110, 409, 410, 411) qui s'ouvrent et/ou se ferment, sous influence mécanique, du fait de la translation réciproque analogue à une course entre le tube de traction (101, 401) et le tube de timon (102, 402).

2. Dispositif de frein à inertie selon la revendication 1,
**caractérisé en ce que**
le tube de traction (101, 301, 401) forme un cylindre de tube de traction (103, 302, 403) et le tube de timon (102, 305, 402) forme un cylindre pneumatique de tube de timon (303, 404).

3. Dispositif de frein à inertie selon la revendication 1 ou 2,
**caractérisé en ce**
**qu'**additionnellement, un cylindre hydraulique de tube de traction (103) pourvu d'un piston (104) est intégré.

4. Dispositif de frein à inertie selon l'une quelconque des revendications précédentes,
**caractérisé en ce**
**qu'**en fonction de l'état de conduite, l'interaction entre le tube de traction et le tube de timon (101, 102, 401, 402) forme trois cylindres pneumatiques à fonctionnement synchrone, dans lesquels le tube de timon (102, 402) exerce au moins une double fonction de piston à l'intérieur du tube de traction.

5. Dispositif de frein à inertie selon l'une quelconque des revendications précédentes,
**caractérisé en ce que**
le tube de traction et le tube de timon (101, 102, 401, 402) disposent de conduits d'air (109, 110, 409, 410, 411), lesquels alimentent en air les cylindres pneumatiques (403, 404, 405) formés pendant leur déplacement en course, de sorte que ces derniers exercent une sorte de travail pneumatique.

6. Dispositif de frein à inertie selon l'une quelconque des revendications précédentes,
**caractérisé en ce**
**qu'**en position de freinage ouverte, le conduit d'air (109, 412) du tube de timon (102, 402) est ouvert, alors que lors d'un processus de freinage, du fait de l'introduction du tube de timon (102, 402) dans le tube de traction (101, 401), il est étanchéifié et fermé.

7. Dispositif de frein à inertie selon l'une quelconque des revendications précédentes,
**caractérisé en ce que**
le conduit d'air (409) du tube de traction (101, 401) est susceptible de se fermer de manière synchrone avec le conduit d'air (109, 412) du tube de timon (102, 402), du fait de l'introduction réciproque.

8. Dispositif de frein à inertie selon l'une quelconque des revendications précédentes,
**caractérisé en ce**
**qu'**au moins deux cylindres pneumatiques (403, 404) sont équipés de ressorts de pression ou de traction (106), lesquels disposent des caractéristiques de résilience correspondantes, pour amener automatiquement par pression de ressort le tube de timon (102, 402) avec les cylindres intégrés dans une position par rapport au tube de traction (101, 401), laquelle correspond à un frein ouvert.

9. Dispositif de frein à inertie selon l'une quelconque des revendications précédentes,
**caractérisé en ce que**
le tube de timon (305, 402) est réalisé avec une ou plusieurs tige(s) de piston (307, 407) creuse(s), conductrice (s) d'air, lesquelles sont guidées par des guidages étanchéifiés dans le cylindre du tube de traction (302, 401), pour intégrer un piston de travail (306, 406) fixé, déplacé par le tube de timon (305, 402), pour générer une pression pneumatique ou pour actionner le frein.

10. Dispositif de frein à inertie selon la revendication 9,
**caractérisé en ce que**
le piston du tube de timon (306, 406) conducteur d'air est équipé d'orifices d'entrée d'air (311, 420), lesquels se referment automatiquement pendant le processus de freinage, du fait de leur position à l'intérieur du fond inférieur du cylindre du tube de traction, de sorte que lors d'un processus d'accélération, aucune pression pneumatique d'amortisseur de démarrage ne puisse être dirigée dans le système de freinage (313, 413).

11. Dispositif de frein à inertie selon l'une quelconque des revendications précédentes,
**caractérisé en ce que**
la tige de piston du tube de timon (307, 407) dispose dans le cylindre du tube de traction d'un passage d'air (312, 412), lequel sert à guider la pression pneumatique via le piston du tube de timon (306, 406) à travers les tiges de piston (307, 407) vers le frein (313) respectif raccordé.

12. Dispositif de frein à inertie selon l'une quelconque des revendications précédentes,
**caractérisé en ce que**
lorsque le système est en position fermée, le tube de timon (305, 402) est poussé par sa plaque de pression avant dans le tube de traction (302, 401), de sorte qu'entre la face intérieure du cylindre du tube de timon (305, 404), il se forme par rapport au cylindre du tube de traction (304, 403) un espace de rebondissement du cylindre (304, 405), alimenté par un conduit d'air (310, 409) additionnel.

13. Dispositif de frein à inertie selon l'une quelconque des revendications précédentes,
**caractérisé en ce que**
le tube cylindrique de timon (305, 402) est équipé d'une purge (314) analogue à un trou oblong, pour évacuer de manière commandée par course la pression pneumatique générée pendant le processus d'accélération.

14. Dispositif de frein à inertie selon l'une quelconque des revendications précédentes,
**caractérisé en ce**
**qu'**en position de freinage ouverte, le conduit d'air (308, 412) du cylindre du tube de timon (303, 402) est ouvert, alors que lors d'un processus de freinage, du fait de l'introduction du tube de timon (305, 402) dans le tube de traction (302, 401), il est étanchéifié et fermé.

15. Dispositif de frein à inertie selon l'une quelconque des revendications précédentes,
**caractérisé en ce que**
le conduit d'air (309, 409) du tube de traction (302, 401) est susceptible de se fermer de manière synchrone avec le conduit d'air (308, 411) de la tige de timon (305, 402), du fait de l'introduction réciproque.
